(19) **Europäisches Patentamt / European Patent Office / Office européen des brevets**

(11) **EP 3 267 156 B1**

(12) **FASCICULE DE BREVET EUROPEEN**

(45) Date de publication et mention
de la délivrance du brevet:
**21.08.2019   Bulletin 2019/34**

(51) Int Cl.:
**G01C 21/20** *(2006.01)*      **G01C 23/00** *(2006.01)*
**G08G 5/00** *(2006.01)*

(21) Numéro de dépôt: **17179564.4**

(22) Date de dépôt: **04.07.2017**

(54) **DISPOSITIF ET METHODE DE CALCUL DE PREDICTION DE PERFORMANCE DE NAVIGATION ESTIMEE**

VORRICHTUNG UND METHODE ZUR BERECHNUNG DER VORHERSAGE EINER GESCHÄTZTEN NAVIGATIONSLEISTUNG

CALCULATION DEVICE AND METHOD FOR PREDICTING ESTIMATED NAVIGATION PERFORMANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.07.2016   FR 1601058**

(43) Date de publication de la demande:
**10.01.2018   Bulletin 2018/02**

(73) Titulaire: **Thales**
**92400 Courbevoie (FR)**

(72) Inventeurs:
 • **ROGER, Pierre**
 **31036 TOULOUSE CEDEX 1 (FR)**
 • **PIERRE, Christophe**
 **31036 TOULOUSE CEDEX 1 (FR)**
 • **GOUTELARD, Hervé**
 **31036 TOULOUSE CEDEX 1 (FR)**

(74) Mandataire: **Lopez, Frédérique**
**Marks & Clerk France**
**Immeuble Visium**
**22 Avenue Aristide Briand**
**94117 Arcueil Cedex (FR)**

(56) Documents cités:
**FR-A1- 2 998 065      FR-A1- 3 008 818**
**US-A1- 2011 301 842**

## Description

### Domaine de l'invention

L'invention concerne le domaine des systèmes de gestion de vol, et plus particulièrement celui de l'aide au pilotage d'aéronefs par le calcul en anticipation de performances de navigation.

### Etat de la Technique

La navigation dite basée sur la performance (PBN) pour « Performance Based Navigation » en anglais, est une méthode de vol qui a été définie par l'organisation de l'aviation civile internationale OACI en 1998 afin d'optimiser l'utilisation de l'espace aérien devant la croissance permanente de sa fréquentation. La méthode PBN permet de définir des conditions à respecter en termes d'intégrité, de disponibilité, de fonctionnalité, d'exactitude et de continuité. Ces conditions se traduisent par des exigences en termes de performance de navigation requise (RNP) pour « Required Navigation Performance » et en termes de performance de navigation estimée EPE (Estimated Position Error) ou EPU (Estimated Position Uncertainty).

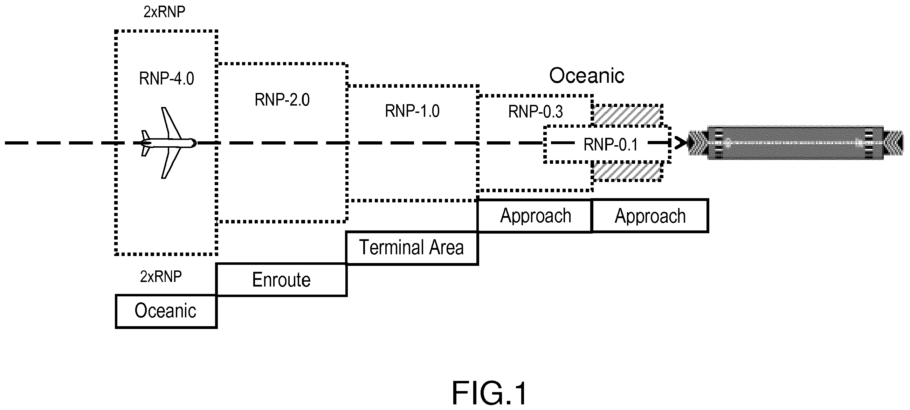

La performance de navigation requise RNP est définie pour des portions de vol. Tel qu'illustré sur la figure 1, la RNP varie selon que l'aéronef est sur une portion de vol de type 'Oceanic' ou 'Enroute' ou Terminal Area' ou encore 'Approach'. Ainsi une procédure avec une certaine performance requise se réfère à un bloc d'espace spécifique. Le niveau de performance requis se traduit par la largeur d'un corridor selon le bloc d'espace. Par exemple, un bloc d'espace océanique peut avoir un corridor de largeur allant de 4 à 10Nm où le symbole Nm correspondant au mile marin et 1 mile marin équivaut à 1852 m.

En phase approche vers un aéroport où beaucoup d'aéronefs coexistent dans un espace réduit, le niveau de performance requise traduit en largeur du corridor vaut généralement 1 Nm en début d'approche, descend jusqu'à 0.5 Nm pour les approches de non-précision, 0.3 Nm pour les approches de précision et jusqu'à 0.1 Nm pour les approches spéciales dites 'RNP AR'. La variabilité du niveau de performance requise permet de définir une trajectoire en trois dimensions composée de lignes droites et de courbes, dans un environnement à densité de circulation élevée, autour de zones sensibles au bruit ou à travers un terrain difficile. Le niveau de performance requise peut être défini dans un fichier de configuration du système de gestion de vol, manuellement par le pilote ou appelé d'une base de données présente dans le système de gestion de vol. Il peut aussi être défini par défaut selon que l'espace survolé par l'aéronef est de type océanique, en route ou aéroport, par exemple.

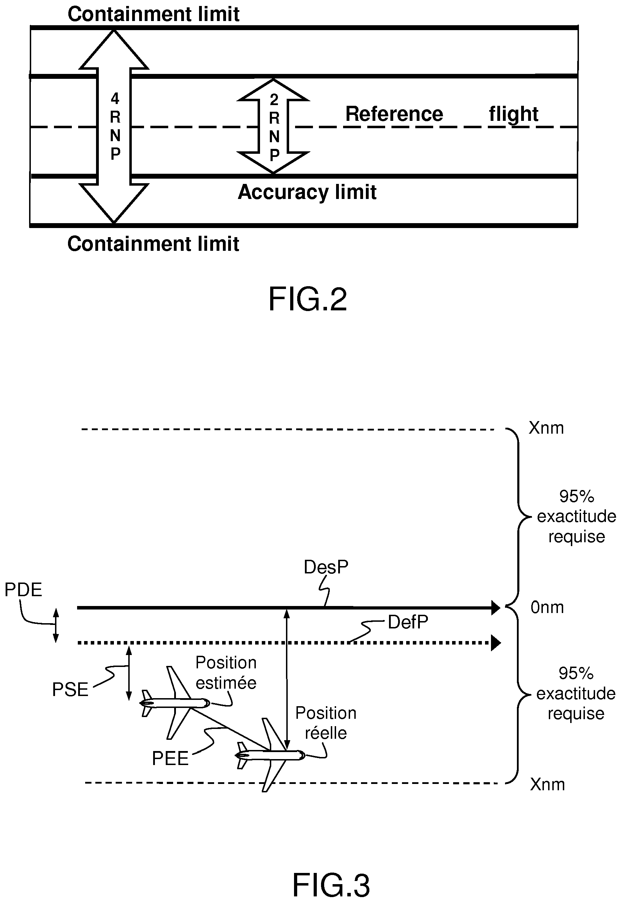

Pour pouvoir suivre les exigences de la procédure RNP, les moyens de navigation de l'aéronef doivent être capables de calculer la position de l'aéronef selon la performance requise sur l'espace survolé. Ainsi, une procédure avec une certaine performance requise signifie que les systèmes de navigation de l'aéronef doivent être capables de garantir que la position de l'aéronef est à l'intérieur d'un cercle de rayon xx Nm. Par exemple, pour une procédure ayant une performance requise RNP de 5 Nm, le système de navigation de l'aéronef doit être capable de calculer la position de l'aéronef dans un cercle de rayon 5 Nm. Plus précisément comme illustré sur la figure 2, le système de navigation doit garantir que l'aéronef ne devra pas sortir d'un corridor de largeur 10 Nm (2 x RNP : accuracy limit) pendant 95% du temps de vol, et garantir que l'aéronef ne franchira jamais la frontière d'un corridor de largeur 20 Nm (4 x RNP : containment limit).

La précision du calcul de la position peut varier le long du vol. En effet, les dispositifs extérieurs de navigation par satellites de type Global Positioning System GPS ont des niveaux de couverture différents selon la zone géographique considérée. Il en est de même pour les moyens de radio navigation. Quant aux moyens inertiels, ils souffrent du problème de dérive inertielle inhérent à ces systèmes.

De manière classique, l'erreur de calcul de la position horizontale aéronef appelée TSE « Total System Error » représentée sur la figure 3 est la somme quadratique de 3 composantes, exprimée par l'équation suivante :

$$TSE = \sqrt{(FTE)^2 + (NSE)^2 + (PDE)^2}$$

où :

- NSE « Navigation System Error » représente l'erreur de localisation de l'avion, appelée aussi PEE pour « Position Estimation Error ». Cette erreur caractérise l'erreur dans le calcul de la position avion à partir des capteurs de radio position, inertiels, ou satellitaires. Elle est souvent représentée sous la forme d'un cercle autour de l'avion.
- PDE « Path Definition Error » représente l'erreur de trajectoire avion. Cette erreur est considérée comme négligeable, car associée à une erreur de codage peu probable de la base de données de navigation. Cette erreur devient encore plus faible pour les systèmes de navigation utilisant un modèle de référence géodésique de type WGS84.

- FTE pour « Flight Test Error » représente l'erreur de guidage avion, appelée aussi PSE pour « Path steering Error ». Cette erreur est liée au mode de guidage de l'avion et a pour source, trois états de guidage classés du moins précis correspondant à l'erreur la plus importante, au meilleur :
  - le guidage manuel sans aide pour suivre la trajectoire,
  - le guidage manuel avec suivi des ordres directeur de vol,
  - le guidage automatique avec le pilote automatique engagé pour le suivi de la trajectoire.

Sur la figure 3, la flèche « DesP » pour « desired path » correspond à la trajectoire souhaitée, et la flèche en pointillé « DefP » pour « defined path » correspond à la trajectoire calculée.

Pour la TSE, c'est une première composante (PDE) qui en pratique est considérée négligeable, une deuxième composante (FTE) qui a 3 valeurs fixes et qui ne s'applique qu'au segment de vol actif, celui que l'aéronef est en train de suivre, et une troisième composante (NSE) qui est liée aux mesures des capteurs. Cette dernière composante peut varier le long de la trajectoire car elle est fonction de la performance des capteurs disponibles autour de la position de l'aéronef qui évolue.

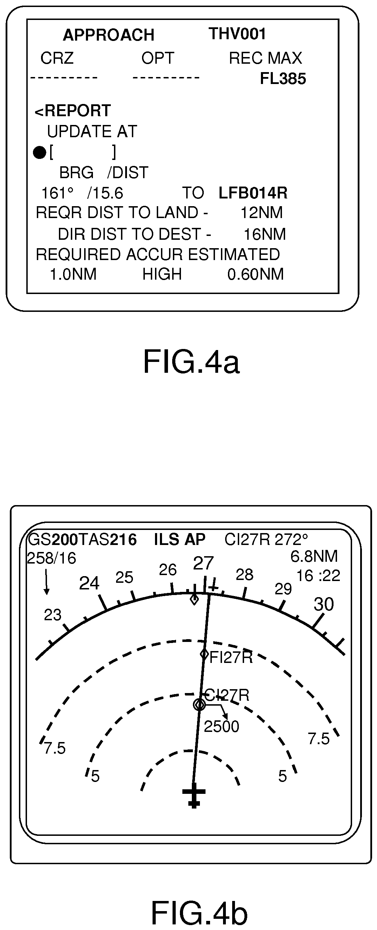

L'erreur dans le calcul de la position de l'aéronef provient des systèmes effectuant le calcul, en général le système de navigation qui est désigné par la terminologie anglo-saxonne « Flight Management System » ou FMS et qui met la route à suivre à disposition du personnel de bord et à disposition des autres systèmes embarqués. Ce système FMS permet aussi une aide à la navigation, par l'affichage d'informations utiles aux pilotes, ou bien par la communication de consignes de guidage à un système de pilotage automatique. Sur certains aéronefs, tel l'A350, c'est le système ADIRU qui opère la fonction localisation de l'avion. Ces systèmes fournissent une estimation de l'erreur de calcul dite (EPE) pour « Estimation Position Error », parfois appelée (EPU) pour « Estimation Position Uncertainty », deux dénominations qui représentent la même information. Cette information est ainsi représentative d'un niveau de performance estimée par rapport à un niveau de performance requise. La figure 4 illustre selon un affichage connu, la prédiction de performance estimée sous l'information EPU variable selon les segments de vol. Le système de navigation doit garantir que la position de l'aéronef est à l'intérieur d'un cercle de rayon 'xx', ce rayon caractérisant l'incertitude EPU dans le calcul de la position. Ce cercle, en fonction de la vitesse de l'avion prend la forme d'un ovoïde pour tenir compte de la possible réduction de la tolérance requise lors du passage d'un segment de vol au suivant, en sortie de virage de transition entre deux segments de vol.

Ainsi, actuellement la connaissance de la performance de navigation requise reste limitée au segment de vol courant, voire à proximité de la fin du segment suivant, alors que la valeur de la performance de navigation requise est variable tout le long du plan de vol. Le pilote ne bénéficie aucunement de la connaissance à l'avance d'un changement de la performance de navigation requise.

De manière analogue, la performance de navigation estimée est fonction de capteurs de localisation dont la disponibilité varie le long du vol, et le calcul de la valeur de la performance de navigation estimée n'est valable aujourd'hui que pour le segment de vol courant suivi par l'aéronef. Ainsi, la connaissance de la performance de navigation estimée reste limitée à la position actuelle de l'aéronef et ne permet pas au pilote d'anticiper sur le non-respect de la performance requise.

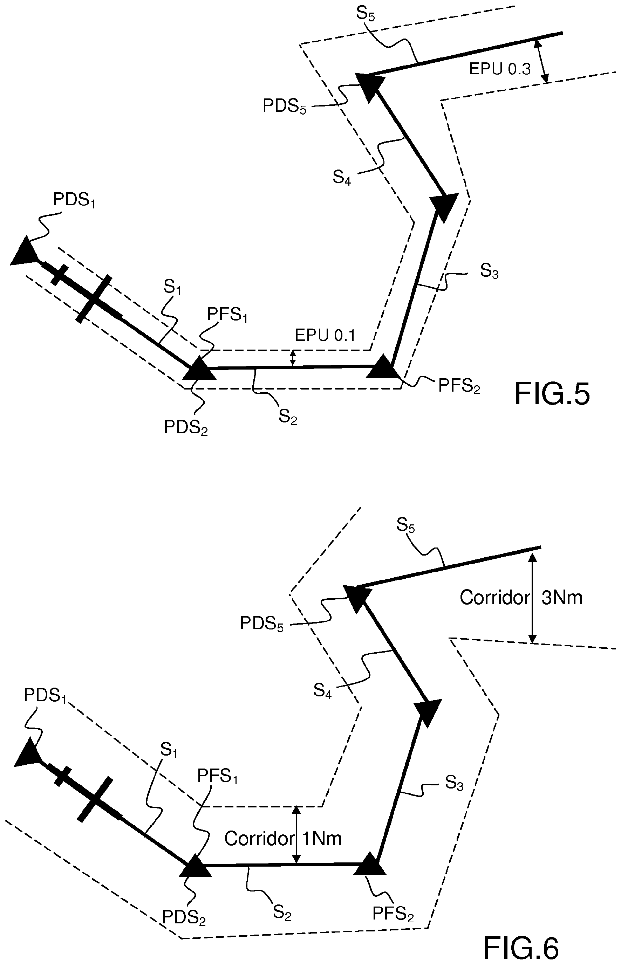

Ainsi, les informations disponibles pour l'opérateur restent les valeurs de performance de navigation requise et de performance de navigation estimée pour le segment de vol courant tel que cela est illustré sur les figures 5a et 5b. La figure 5a représente une page d'un écran d'un système de gestion du vol, écran qui n'est pas accessible par le pilote en position « tête haute » et dont l'accès nécessite de la part du pilote d'entrer dans le menu du système de gestion pour faire apparaître cette page sur un écran. Sur l'exemple de cette page, le titre « APPROACH » indique que les informations fournies sont relatives à une phase d'approche d'un aéroport, par exemple. En bas à gauche, le terme « REQUIRED » est affiché avec une valeur numérique de 1.0 NM qui indique le niveau de performance requise par la procédure RNP. En bas à droite, le terme « ESTIMATED » est affiché avec une valeur numérique de 0.60 NM qui indique le niveau de performance estimé. Dans l'exemple, l'exigence de la procédure RNP est satisfaite, le niveau de performance de navigation estimée étant inférieur au niveau de performance de navigation requise. Le terme « HIGH » associé au terme « ACCUR » représente une indication qualitative du niveau d'intégrité des calculs de navigation pour le pilote et montre que le niveau de sûreté est considéré comme élevé.

Par ailleurs, l'opérateur maintient l'aéronef sur une trajectoire calculée qui est dite trajectoire « fil » tel que cela est illustré sur la figure 5b. La figure 5b représente une page d'un écran de navigation du système de gestion de vol embarqué à bord d'un aéronef qui montre la trajectoire à suivre par l'aéronef, est généralement facilement accessible en position « tête haute » par le pilote de l'aéronef, ne nécessitant aucune manoeuvre pour y avoir accès. La position courante de l'aéronef est indiquée par un symbole en forme d'aéronef, représenté au centre de trois cercles concentriques de rayon croissant. La trajectoire de l'aéronef est indiquée par un axe ou « fil » passant par la position courante de l'aéronef, un premier et un deuxième point de passage (CI27R, FI27R). La position courante et le premier point de passage définissent une première portion courante de trajectoire, une portion de trajectoire étant communément appelé segment ou « leg » en anglais. Les premier et deuxième points de passage définissent une deuxième portion de trajectoire.

Les systèmes de l'aéronef doivent respecter et ne pas dépasser la performance de navigation requise qui est exprimée en largeur Nm d'un corridor. Or avec l'affichage fil, l'opérateur n'a pas d'information sur la latitude de navigation dans le corridor qui est défini par la performance de navigation requise, et si un obstacle se trouve dans le corridor, le pilote ne le verra qu'au dernier moment et l'opération va nécessiter une demande d'autorisation en urgence à l'opérateur au sol.

Ainsi actuellement, les systèmes de navigation délivrent un niveau de performance de navigation requise et un niveau de performance de navigation estimée qui sont limités au segment de vol courant ou au mieux au segment suivant pour la position courante de l'aéronef. De plus, les systèmes de navigation connus ne permettent pas à l'opérateur de connaitre la « liberté » de naviguer dans un corridor défini tout en respectant la procédure RNP.

Les documents suivants présentent des solutions relatives à l'amélioration de la prédiction de performance de navigation :

- FR 2998 065 A1 du demandeur qui propose un système permettant d'anticiper des précisions de navigation requises ; et
- US 2011/301842 A1 de Krupansky et al. qui présente un système permettant de déterminer des performances de navigation estimées à base des conditions actuelles et des caractéristiques de performance de l'aéronef. La solution ne prend pas en compte de prédiction temporelle le long de la trajectoire.
- FR 3008 818 A1 de Gmerek et al. présente un dispositif et procédé de prédiction au sol de la précision, l'intégrité et la disponibilité de la position d'un aéronef le long d'une trajectoire, tenant compte d'une intégrité d'un système de positionnement par satellites et d'au moins une intégrité matérielle à bord de l'aéronef.

Un but de l'invention est de palier aux inconvénients des systèmes connus.

**Résumé de l'invention**

Un objet de la présente invention est de proposer un dispositif et un procédé permettant de calculer la prédiction de performance de navigation estimée pour une trajectoire associée à une liste de segments d'un plan de vol.

Un autre objet de l'invention est de proposer un dispositif et un procédé permettant de transformer une trajectoire fil en une trajectoire corridor, permettant de garantir la conformité aux exigences de performance de navigation PBN tant que l'avion ne sort pas de la trajectoire corridor.

Avantageusement, le dispositif de l'invention fournit une aide au pilotage d'un aéronef dans le cadre de procédures PBN en offrant une capacité à prédire l'estimation de performance de navigation sur une liste de segments.

Avantageusement, le dispositif de l'invention fournit de manière simple une information trajectoire corridor, permettant à l'opérateur de l'aéronef de mieux maitriser la trajectoire de l'avion et la performance attendue et disponible, en lui donnant facilement accès au couloir dans lequel la performance est garantie et aux limites à ne pas dépasser. Par la visualisation immédiate de la latitude de navigation dans un corridor, l'évitement d'un obstacle devient une opération facile à mener par le pilote, sans demande d'autorisation préalable ou avec une demande très anticipée car l'opérateur ou le pilote grâce à la connaissance de la performance estimé, respecte la sécurité qui lui est affichée de manière évidente par la trajectoire corridor.

Pour obtenir les résultats recherchés, procédés, dispositifs et un produit programme d'ordinateur sont décrits.

En particulier, un procédé, opéré par une plateforme de calcul pour aéronef, pour le calcul de prédiction de performance de navigation estimée pour une trajectoire d'un aéronef, comprend les étapes de :

- recevoir une liste de segments comprenant l'ensemble des segments d'un plan de vol avec une prédiction d'un temps de passage associée à chaque segment;
- pour chaque segment de la liste :
- identifier les systèmes de positionnement disponibles dans la zone géographique dudit segment ;
- déterminer les valeurs de performance des systèmes de positionnement identifiés et sélectionner le système de positionnement présentant l'erreur de calcul de performance de navigation la plus faible pour la position dudit segment et ledit temps de passage prédit ; et
- calculer une prédiction de performance de navigation estimée, à partir de données issues du système de positionnement sélectionné; et
- mettre à jour la liste de segments avec la prédiction de performance de navigation estimée associée à chaque segment.

Dans un mode préférentiel, l'étape d'identification des systèmes de positionnement consiste à identifier l'ensemble des systèmes de positionnement satellitaires, balises et inertiels disponibles pour chaque segment. L'étape de calcul de la prédiction de performance de navigation estimée consiste à déterminer si une prédiction satellitaire pour chaque segment est précise et disponible, et si oui, calculer la prédiction de performance de navigation estimée à partir des données satellitaires.

Selon une variante, si la prédiction satellitaire pour un segment n'est pas précise ou non disponible, le procédé compare les valeurs de performance des systèmes balises et inertiels et calcule la prédiction de performance de navigation estimée à partir des données du système de positionnement balises ou inertiel présentant l'erreur de calcul de performance de navigation la plus faible pour ledit segment.

Dans une variante, le calcul de la prédiction de performance de navigation estimée, lorsqu'il est fait à partir des données du système inertiel prend en compte la dérive du système inertiel. Dans une alternative, le calcul de la prédiction de performance de navigation estimée, lorsqu'il est fait à partir des données du système balises prend en compte la performance des balises disponibles dans la zone géographique dudit segment.

Avantageusement, les valeurs de performance de navigation des systèmes de positionnement satellitaires sont issues d'un récepteur satellitaire comprenant une fonctionnalité « RAIM » embarqué à bord de l'aéronef.

Dans un mode de réalisation, un segment peut être découpé en sous-segments pour effectuer le calcul de prédiction, le découpage pouvant être fait selon des longueurs de sous-segments fixes ou en considérant la portée maximale des prédictions satellitaires.

Avantageusement, le procédé peut être exécuté pour un calcul de prédiction de performance de navigation horizontale estimée et/ou pour un calcul de prédiction de performance de navigation verticale estimée.

Toujours avantageusement, le procédé peut être ré-exécuté automatiquement si des prédictions de temps de passage ou le plan de vol changent.

L'invention concerne aussi un dispositif pour le calcul de prédiction de performance de navigation estimée pour une trajectoire d'un aéronef, le dispositif comprenant :

- des moyens permettant de recevoir une liste de segments comprenant l'ensemble des segments d'un plan de vol avec une prédiction d'un temps de passage associée à chaque segment;
- des moyens permettant, pour chaque segment de la liste :
- d'identifier les systèmes de positionnement disponibles dans la zone géographique dudit segment ;
- de déterminer les valeurs de performance des systèmes de positionnement identifiés et sélectionner le système de positionnement présentant la meilleure valeur de performance de navigation pour la position dudit segment et ledit temps de passage prédit ; et
- de calculer une prédiction de performance de navigation estimée, à partir de données issues du système de positionnement sélectionné; et
- des moyens permettant de mettre à jour la liste de segments avec la prédiction de performance de navigation estimée associée à chaque segment.

Avantageusement, le dispositif comprend des moyens aptes à opérer les étapes du procédé. Dans un mode de réalisation, le dispositif est intégré dans le système de gestion de vol (FMS) de l'aéronef ou alternativement comme composant d'un ordinateur embarqué de type EFB.

L'invention concerne aussi un produit programme d'ordinateur comprenant des instructions de code permettant d'effectuer les étapes du procédé, lorsque le programme est exécuté sur un ordinateur.

Dans un mode de réalisation, le procédé de calcul des prédictions de performance de navigation estimée peut être exécuté pour en permettre un affichage. L'invention concerne aussi un procédé d'affichage de prédictions de performance de navigation estimée et requise pour une trajectoire d'un aéronef, le procédé étant opéré par une plate-forme de calcul pour aéronef et comprend les étapes de :

- calculer des prédictions de performance de navigation estimée pour une liste de segments d'un plan de vol, selon les étapes du procédé revendiqué;
- calculer pour la même liste de segments, des prédictions de performance de navigation requise ; et
- représenter graphiquement sur un moyen d'affichage lesdites prédictions de performance de navigation estimée et requise.

Dans un mode de réalisation, l'étape de calcul des prédictions de performance de navigation requise comprend les étapes de :

- recevoir une liste de segments d'un plan de vol ;

- pour chaque segment de la liste :
- identifier toutes les contingences constituant des contraintes de performance de navigation;
- déterminer et sélectionner la contingence la plus contraignante pour le segment ;
- calculer une prédiction de performance de navigation requise, en fonction de données issues de la contingence sélectionnée ;
   et
- mettre à jour la liste de segments avec la prédiction de performance de navigation requise associée à chaque segment.

Dans un mode de réalisation, la représentation graphique consiste à afficher en superposition sur une trajectoire fil lesdites prédictions de performance de navigation estimée et requise.

Dans une variante, avant l'étape d'affichage, le procédé permet pour chaque segment de soustraire aux prédictions des performances de navigation requise, les prédictions de performance de navigation estimée, pour construire une trajectoire corridor, et la représentation graphique consiste à afficher lesdites prédictions de performance de navigation estimée et requise en fonction du corridor.

Selon un mode de réalisation, l'étape d'affichage consiste à afficher une trajectoire fil pour les segments ayant une prédiction de performance de navigation estimée supérieure à la prédiction de performance de navigation requise.

Dans une variante, la représentation graphique consiste à représenter la latitude de navigation en contraste sur la trajectoire corridor.

L'invention couvre aussi un dispositif d'affichage de prédictions de performance de navigation estimée et requise pour une trajectoire d'un aéronef, le dispositif d'affichage comprend un moyen d'affichage et des moyens de calcul permettant de calculer des prédictions de performance de navigation estimée et requise, les prédictions de performance de navigation estimée sont calculées selon les étapes du procédé de calcul revendiqué, et le dispositif comprend de plus des moyens pour représenter graphiquement sur le moyen d'affichage les prédictions de performance de navigation estimée et requise. Le moyen d'affichage peut être un écran du cockpit de l'aéronef, comme un « Navigation Display » (ND) ou un écran «Primary Flight Display » (PFD).

**Description des figures**

Différents aspects et avantages de l'invention vont apparaitre en appui de la description d'un mode préféré d'implémentation de l'invention mais non limitatif, avec référence aux figures ci-dessous :

La figure 1 illustre une performance de navigation requise RNP pour différentes portions de vol ;
La figure 2 illustre les limites de navigation RNP d'un aéronef dans un corridor ;
La figure 3 illustre les trois composantes de l'erreur de calcul de la position horizontale aéronef;
Les figures 4a et 4b illustrent différentes pages de l'écran de navigation d'un système de gestion de vol, selon l'état de l'art connu;
La figure 5 illustre un affichage de la prédiction de performance de navigation estimée pour une trajectoire associée à une liste de segments selon un mode de réalisation de l'invention;
La figure 6 illustre un affichage de la prédiction de performance de navigation requise pour une trajectoire associée à une liste de segments selon un mode de réalisation de l'invention;
La figure 7 illustre un affichage combiné des prédictions de performance de navigation requise et estimée pour une trajectoire associée à une liste de segments selon un mode de réalisation de l'invention;
La figure 8 illustre un affichage combiné des prédictions de performance de navigation requise et estimée pour une trajectoire associée à une liste de segments selon un autre mode de réalisation de l'invention;
La figure 9a illustre un procédé de calcul des prédictions de performance de navigation requise pour une liste de segments dans un mode de réalisation de l'invention;
La figure 9b illustre le procédé de calcul des prédictions de performance de navigation estimée pour une liste de segments dans un mode de réalisation de l'invention;
La figure 9c illustre le procédé de construction d'une trajectoire corridor dans un mode de réalisation de l'invention ;
La figure 10 illustre schématiquement la structure et les fonctions d'un système de gestion de vol de type FMS permettant d'opérer la présente invention ;
La figure 11 illustre le procédé de calcul de la prédiction EPU pour un segment dans un mode de réalisation de l'invention;
La figure 12 illustre le procédé de calcul de la prédiction EPU-inertie pour un segment dans un mode de réalisation de l'invention;
La figure 13 illustre le type d'EPU considéré pour des segments en fonction de la disponibilité ou de la perte de fonctionnalité RAIM ;

La figure 14 illustre la valeur de corridor (Défaut, Pilote, Database) prise en compte pour un segment ;

Les figures 15 à 20 illustrent différentes variantes d'affichage des prédictions de performance de navigation requise et estimée ;

La figure 21 illustre les trois composantes de l'erreur de calcul de la position verticale aéronef ;

Les figures 22 et 23 illustrent des variantes d'affichage de corridor vertical.

## Description détaillée de l'invention

La figure 5 représente un exemple d'affichage selon un mode de réalisation de l'invention, de la prédiction de performance de navigation estimée (EPU) pour une trajectoire fil associée à une liste de segments. Cet affichage permet à l'opérateur de surveiller les performances de navigation de l'aéronef. Une liste de segments telle que définie dans la description, est une séquence continue de segments (S1, S2, ..., Si, ..., Sn), les segments étant droits ou courbes, chaque segment ayant un point début ($PD_{Si}$) et un point final ($PF_{Si}$) respectivement définis par leur latitude, longitude et altitude. Par ailleurs, à tout segment d'une liste est associée une heure ou un temps de passage sur le point final du segment, et on parle de liste de segments datée. Dans l'exemple de la figure 5, cinq segments (S1 à S5) d'une liste de segments Sn sont représentés. Le segment S1 qui a pour point début $PD_{S1}$ et pour point final $PF_{S1}$ contient la représentation de l'aéronef dans sa position courante, le segment S2 qui a pour point début $PD_{S2}$ et pour point final $PF_{S2}$ affiche une prédiction de performance de navigation estimé EPU de 0.1 Nm. Le segment S5 qui a pour point début $PD_{S5}$ affiche une prédiction de performance estimée de 0.3 Nm. Pour des raisons de simplification, seuls les EPU de deux segments sont représentés.

La figure 6 représente un exemple d'affichage selon un mode de réalisation de l'invention, de la prédiction de performance de navigation requise pour une trajectoire fil associée à une liste de segments, où la liste de segments (S1 à S5) est identique à celle de la figure 5. Dans cette représentation, la prédiction de performance requise est affichée en demi-largeur d'un corridor correspondant au corridor à l'intérieur duquel l'aéronef peut circuler. Cet affichage permet à l'opérateur d'anticiper une exigence de performance de navigation requise plus contraignante. Sur le segment S2, cette valeur vaut 1 Nm signifiant que l'aéronef doit circuler dans un couloir de largeur 2Nm sur cette portion de vol, et pour le segment S5, cette valeur vaut 0.3 Nm signifiant que l'aéronef doit circuler dans un couloir de largeur 0.6 Nm sur cette portion de vol.

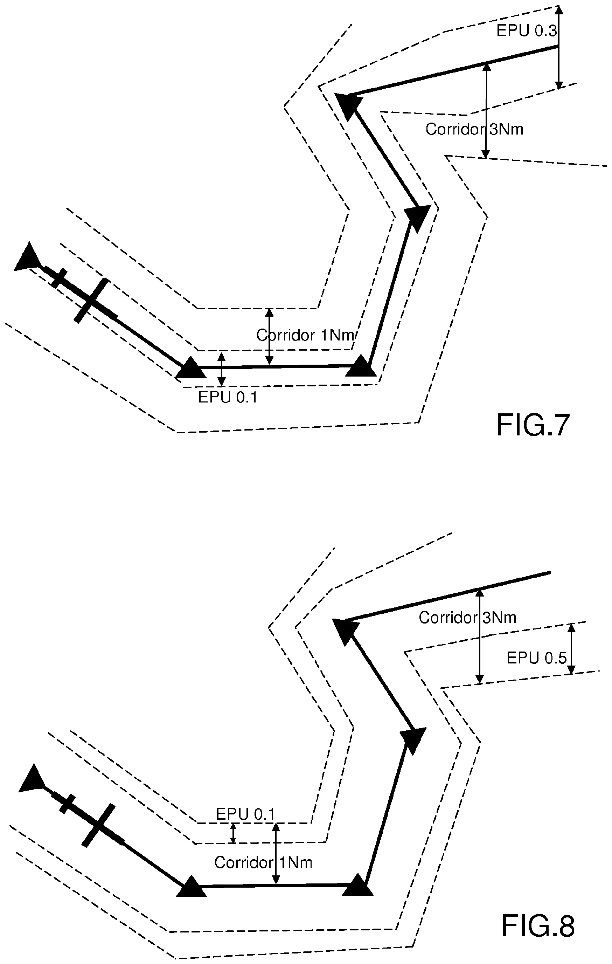

Les figures 7 et 8 représentent des exemples d'affichage combinant des prédictions de performance de navigation requise et estimée pour une trajectoire fil associée à une liste de segments, selon différents modes de réalisation de l'invention. L'affichage de la figure 7 peut être une représentation conforme à la représentation mentale d'un opérateur avec un premier corridor relatif à l'EPU et un deuxième corridor correspondant à la performance de navigation requise. L'affichage de la figure 8 permet à l'opérateur même en mode non managé (où le mode NAV de suivi automatique de la trajectoire est non engagé) de connaitre la situation relative de l'aéronef par rapport à la limite réglementaire (la largeur du corridor « requis »).

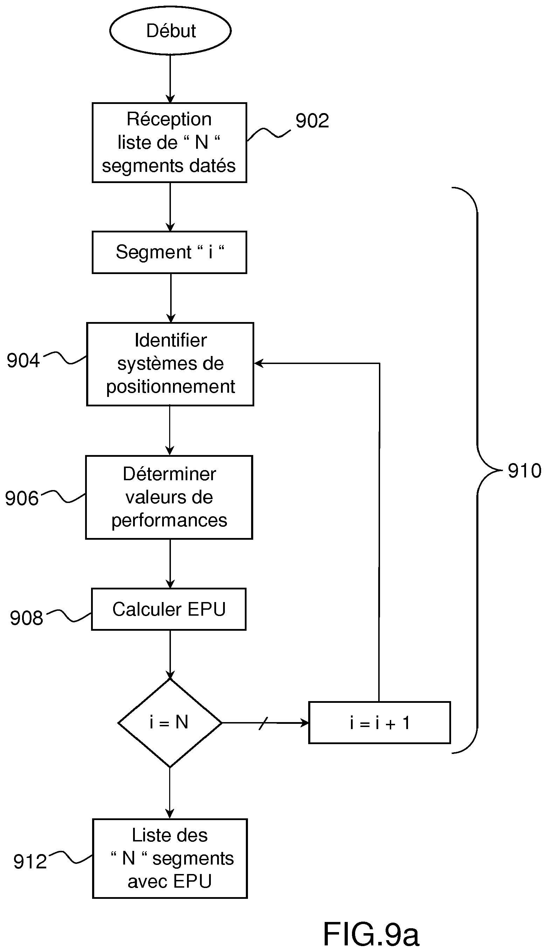

La figure 9a illustre selon un mode de réalisation de l'invention, des étapes du procédé de calcul des prédictions de performance estimée pour une liste de segments d'un plan de vol.

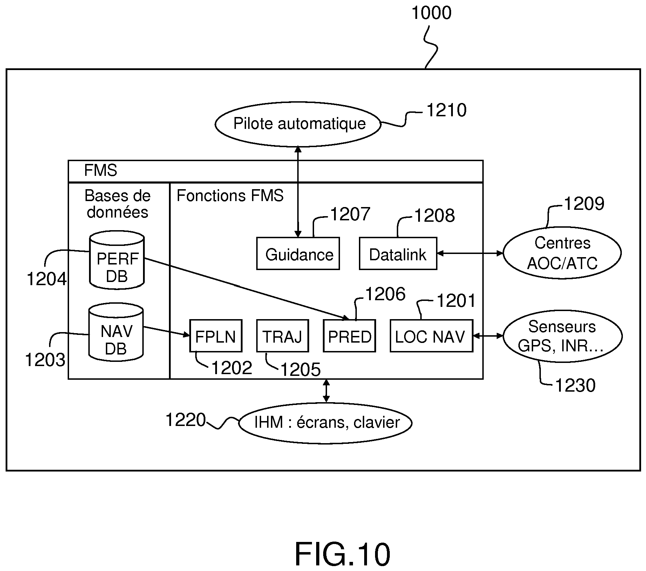

Le procédé débute par une étape (902) de réception d'une liste datée de 'N' segments de vol pour une trajectoire associée à un plan de vol. A chaque segment du plan de vol, il est associé une heure prédite de passage de l'aéronef sur ledit segment. La liste des segments est produite par le système de gestion de vol. Les données plan de vol sont généralement fournies par le système de gestion de vol (FMS) qui dispose d'un plan de vol courant de l'aéronef qui comprend les différents points du plan de vol. La figure 10 illustre schématiquement la structure et les fonctions d'un système de gestion de vol de type (FMS) connu, permettant d'implémenter les moyens aptes à opérer le procédé de l'invention. Un système de type FMS est installé dans un avion et dispose d'une interface homme-machine (1220) comprenant des moyens de saisie, par exemple formés par un clavier, et des moyens d'affichage, par exemple formés par un écran d'affichage, ou bien simplement un écran d'affichage tactile, ainsi qu'au moins les fonctions suivantes:

- Navigation (LOCNAV) (1201), pour effectuer la localisation optimale de l'aéronef en fonction des moyens de géolocalisation (1230) tels que le géo-positionnement par satellite ou GPS, GALILEO, les balises de radionavigation VHF, les centrales inertielles. Les procédés et les systèmes décrits affectent ou concernent principalement cette partie du calculateur;
- Plan de vol (FPLN) (1202), pour saisir les éléments géographiques constituant le "squelette" de la route à suivre, tels que les points imposés par les procédures de départ et d'arrivée, les points de cheminement, les couloirs aériens, communément désignés "airways" selon la terminologie anglaise ;
- Base de données de navigation (NAVDB) (1203), pour construire des routes géographiques et des procédures à partir de données incluses dans les bases relatives aux points, balises, legs d'interception ou d'altitude, etc;
- Base de données de performance, (PERFDB) (1204), contenant les paramètres aérodynamiques et moteurs de l'appareil ;

- Trajectoire latérale (TRAJ) (1205), pour construire une trajectoire continue à partir des points du plan de vol, respectant les performances de l'aéronef et les contraintes de confinement (RNP) ;
- Prédictions (PRED) (1206), pour construire un profil vertical optimisé sur la trajectoire latérale et verticale et donnant les estimations de distance, heure, altitude, vitesse, carburant et vent notamment sur chaque point, remises à jour à chaque changement de paramètre de pilotage et calculées jusqu'à la destination, et qui seront affichées à l'équipage. ;
- Guidage (GUID) (1207), pour guider dans les plans latéraux et verticaux l'aéronef sur sa trajectoire tridimensionnelle, tout en optimisant sa vitesse, à l'aide des informations calculées par la fonction Prédictions (1206). Dans un aéronef équipé d'un dispositif de pilotage automatique (1210), ce dernier peut échanger des informations avec le module de guidage (1207) ;
- Liaison de données numériques (DATALINK) (1208) pour échanger des informations de vol entre les fonctions Plan de vol/Prédictions et les centres de contrôle ou les autres aéronefs ;
- un ou plusieurs écrans, notamment des écrans dits FMD, ND et VD qui sont : Le FMD (« Flight Management Display » en anglais) est une interface, généralement un écran d'affichage, pouvant être interactif (par exemple un écran tactile), permettant d'interagir avec le FMS. Par exemple, il permet de définir une route et de déclencher le calcul du plan de vol et de la trajectoire associée. Il permet également de consulter le résultat du calcul sous forme textuelle. Le ND (« Navigation display » en anglais) est une interface, généralement un écran d'affichage, pouvant être interactif (par exemple un écran tactile), permettant de consulter en deux dimensions la trajectoire latérale de l'avion, vue de dessus. Différents modes de visualisation sont disponibles (rose, plan, arc, etc) ainsi que selon différentes échelles (configurables). Le VD (« Vertical Display » en anglais) est une interface, généralement un écran d'affichage, pouvant être interactif (par exemple un écran tactile), permettant de consulter en deux dimensions le profil vertical, projection de la trajectoire. Comme pour le ND, différentes échelles sont possibles pour le VD.

Dans un mode de réalisation alternatif, le dispositif de l'invention peut être implémenté au niveau d'un ordinateur embarqué séparé du FMS, de type « Electronic Flight Bag » (EFB) selon l'anglicisme consacré. L'EFB est un dispositif électronique de gestion de l'information qui aide les équipages à effectuer des tâches de gestion de vol. Il s'agit d'une plate-forme informatique qui peut héberger des applications logicielles spécialement développées pour opérer des fonctions comme les calculs de performances de décollage, de centrage.

Le procédé permet ensuite (904) de récupérer les valeurs de performance d'un ensemble de systèmes de positionnement à l'aéronef. Les principaux systèmes de positionnement connus sont les balises de radio navigations au sol (ex : VOR, TACAN, DME, LOC, MLS...), les systèmes de navigations inertiels (ex : IRS, ADIRS, AHRS, etc...) et les systèmes de positionnement à base de satellites (ex : GNSS, GPS, GLONASS...). A chaque type de système de positionnement est associée une performance de navigation.

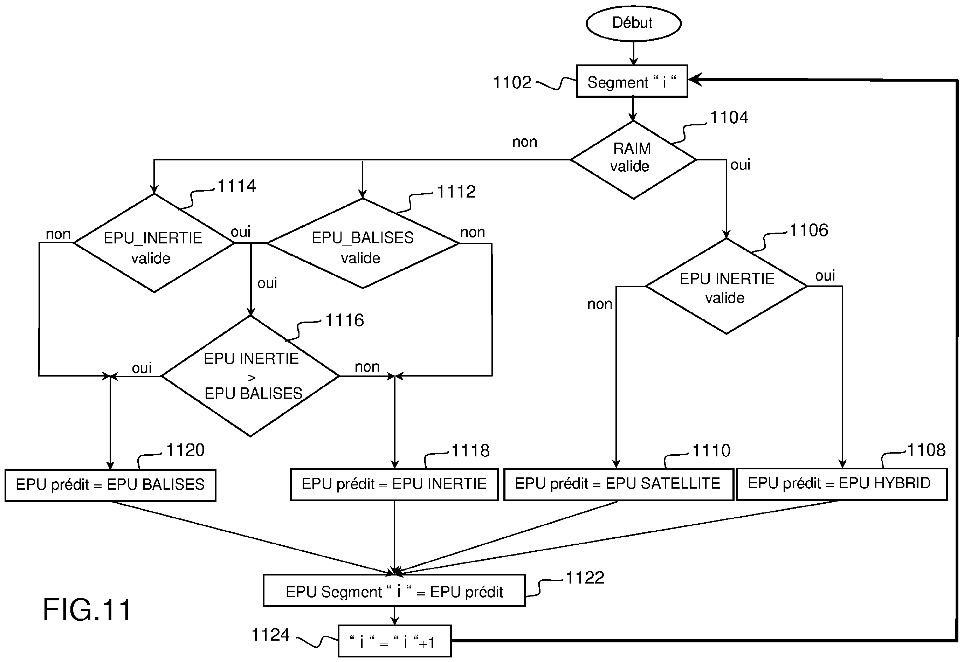

A l'étape suivante (906), le procédé permet de calculer pour chaque segment 'i' de la liste, une prédiction de performance de navigation estimée, en prenant en compte la position du segment 'i' considéré et la prédiction d'heure de passage sur ce segment, ainsi que les données des systèmes de positionnement au travers des centrales inertielles, des balises de navigation et des systèmes satellitaires. Tel que détaillé plus loin en référence à la figure 11, le calcul de la prédiction de performance estimée (908) se base sur une utilisation innovante des fonctionnalités des systèmes de réception satellites à bord de l'aéronef, et d'informations produites par les différents senseurs de position. Avantageusement, le procédé de l'invention permet de comparer les informations produites par les différents systèmes de positionnement et de sélectionner pour le calcul de la prédiction de performance estimée, celui qui offre la meilleure performance de navigation pour chaque segment 'i', en fonction de la position du segment et de l'heure de passage prédite.

La sortie (910) du procédé de calcul de prédiction de la performance de navigation estimée est la liste des 'N' segments pour tout le plan de vol associé à la trajectoire, avec pour chaque segment, la prédiction de performance de navigation estimée (EPU_PREDIT) calculée.

Selon un mode de réalisation, le procédé de calcul de la prédiction de performance de navigation estimée sur tout le plan de vol est effectué à intervalles réguliers, si aucun événement de relance automatique n'est apparu depuis une certaine durée (15mn par exemple), afin de tenir compte de pannes satellites, de pannes de balises de navigation ou d'autres événements.

Dans un autre mode de réalisation, le procédé de calcul de la prédiction de performance de navigation estimée peut être relancé automatiquement si les prédictions de temps de passage sur les segments changent de manière significative par exemple dû à un changement de vitesse, des phénomènes météo (vents importants).

Dans une autre variante, le calcul de la prédiction de performance estimée peut être relancé suite à une relance du calcul de la prédiction de performance requise.

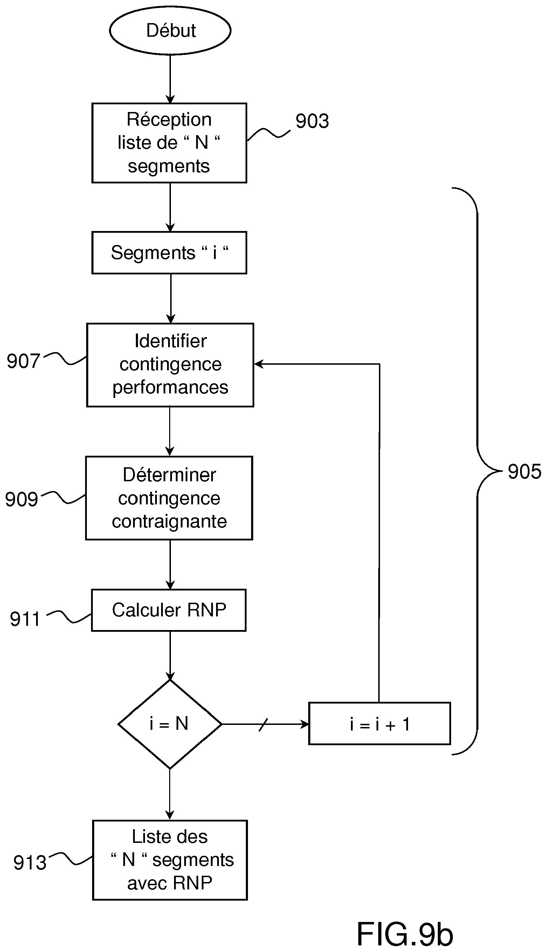

La figure 9b illustre selon un mode de réalisation de l'invention, des étapes du procédé de calcul des prédictions de performance requise pour une liste de segments d'un plan de vol. Le procédé débute par une étape (903) de réception d'une liste de 'N' segments de vol pour une trajectoire associée à un plan de vol.

Dans une étape suivante (905) le procédé permet de calculer pour chaque segment de la liste, une prédiction de performance requise.

Pour chaque segment 'i' de la liste, le procédé permet (907) d'identifier via les informations de la base de données navigation et les entrées opérateur, l'ensemble des contraintes de performance de navigation requise, de sélectionner (909) la contingence la plus contraignante, et de calculer (911) une prédiction de performance requise pour le segment considéré.

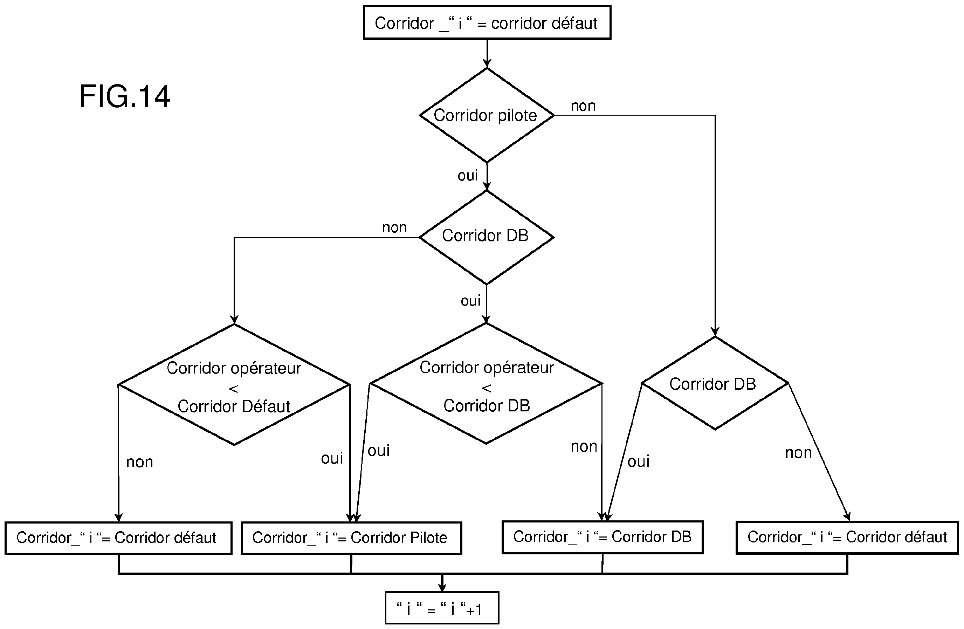

Lorsqu'un opérateur définit une valeur de largeur de corridor, celle-ci est applicable sur le segment courant et sur tous les autres segments de la liste entière. Cependant, si une réglementation est associée à la performance de navigation, elle est traduite à travers les autres options (Data base navigation, aire de vol) et peut être plus contraignante que la valeur saisie par l'opérateur. Dans l'état de l'art, lorsque la valeur définie par l'opérateur devient une valeur supérieure à celle correspondant à la réglementation, le système envoie un message au pilote lui demandant de baisser la valeur du corridor pour la mettre en conformité avec la réglementation. Avantageusement, avec le procédé de l'invention, pour un segment 'i' donné, pour le calcul de prédiction de performance requise, le système prend la contingence la plus contraignante, c'est-à-dire la valeur de la demi-largeur du corridor. Le système ne prend en considération le corridor défini par l'opérateur que s'il est inférieur à celui de la réglementation. Quand le corridor est défini pour un segment dans la base de données, il correspond à la règlementation de performance requise pour ce segment et il est applicable sauf si la valeur pilote est plus contraignante. Quand ni une valeur opérateur, ni une valeur « Database » n'existe pour un segment, une valeur de corridor par défaut, déterminée en fonction de l'aire géographique de vol (terminal, en route océanique, approche), est appliquée pour ce segment. Ainsi, quand le corridor est défini pour un segment avec la valeur par défaut, il correspond à la réglementation de performance requise pour ce segment et il est applicable sauf si la valeur pilote est plus contraignante. La figure 14 illustre quelle valeur de corridor (Défaut, Pilote, Database) est prise en compte pour un segment 'i'.

La sortie (913) du procédé de calcul de prédiction de la performance de navigation requise est la liste des 'N' segments pour tout le plan de vol associé à la trajectoire, avec pour chaque segment, la prédiction de performance de navigation requise (RPN) calculée.

Ainsi, le but du système de calcul de la prédiction de la performance de navigation requise est de définir pour chacun des segments de la liste, la performance de navigation requise qui est applicable c'est-à-dire qui est en conformité avec la règlementation.

Le calcul de la prédiction de performance de navigation requise n'est pas relancé de manière régulière ni de manière automatique. Le calcul est relancé suite à une modification par l'opérateur de la liste des segments (par ajout, suppression de segments) ou suite à une modification par l'opérateur de la valeur du corridor associé à un segment.

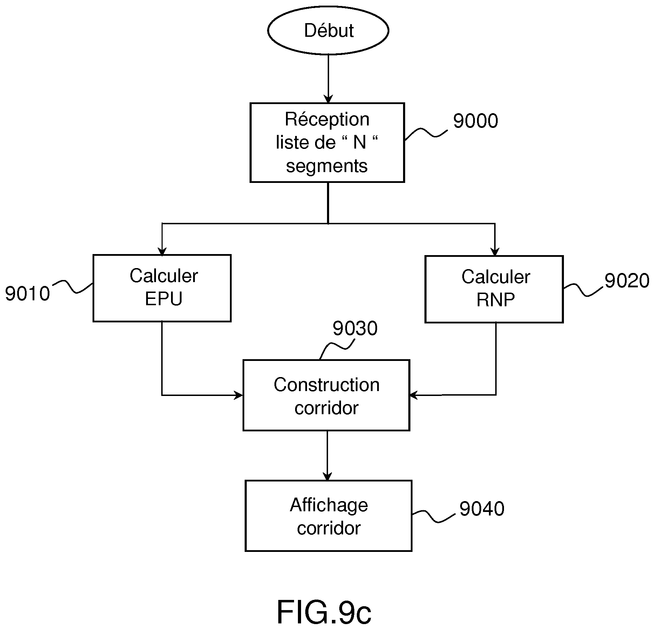

Avantageusement, tel qu'illustré sur la figure 9c, le procédé mis en oeuvre par le dispositif de l'invention permet de combiner les prédictions de performance de navigation estimée (9010) et requise (9020) calculées pour une liste de segments (9000), afin de construire (9030) une trajectoire corridor de navigation.

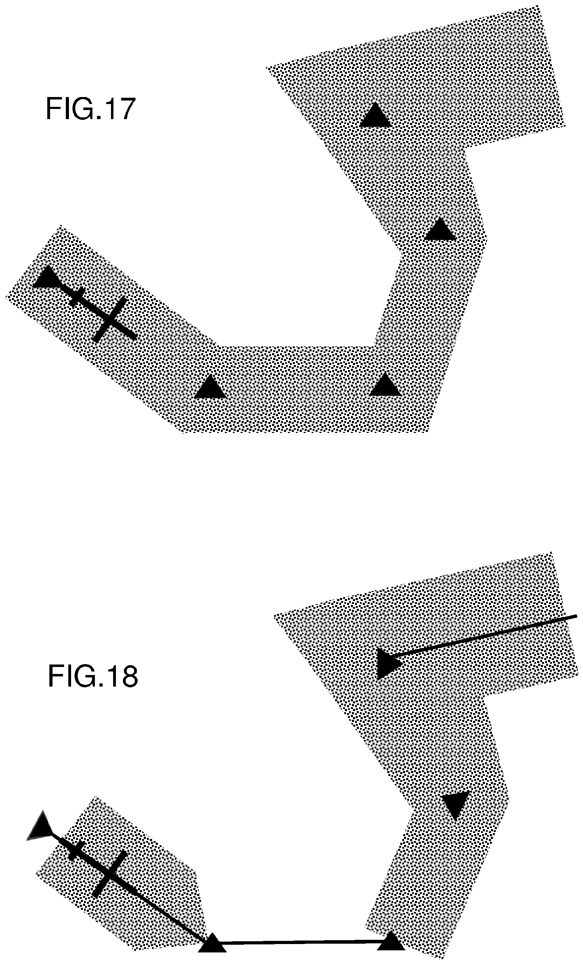

Avantageusement, il est proposé deux approches pour construire un corridor à partir des deux types de prédiction de performance. Dans une première option, le procédé permet de soustraire la performance prédite de celle requise, de manière à ce qu'il ne puisse jamais dépasser la contingence requise, quelle que soit la position de l'avion dans ce corridor. L'avantage de cette solution est que si une dégradation de la performance de navigation intervient, elle est progressive et visible par l'opérateur. L'affichage résultant de cette approche est illustré sur la figure 18.

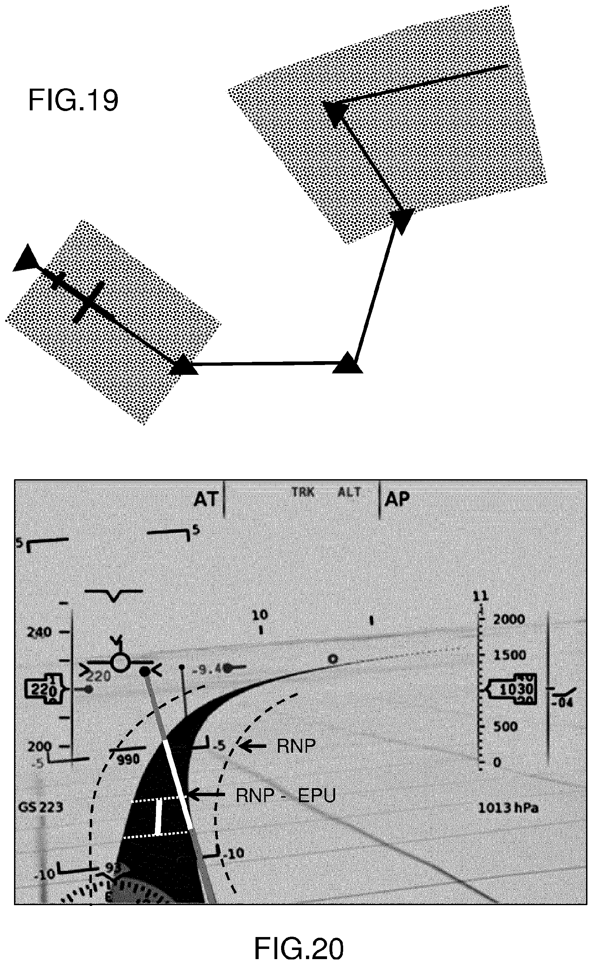

Une approche alternative pour construire un corridor est de considérer un couloir de largeur « 1 x corridor » quand la performance prédite est strictement inférieure à la performance requise. Si la performance prédite est supérieure ou égale à la performance requise, le ruban devient un fil. Dans ce cas la garantie n'est pas de rester à l'intérieur du corridor mais de garantir de ne jamais franchir le corridor 2 fois plus large, ce qui est l'objectif majeur de sécurité. L'avantage de cette solution est que le couloir dans lequel l'aéronef peut voler est plus large. L'affichage résultant de cette approche est illustré sur la figure 19.

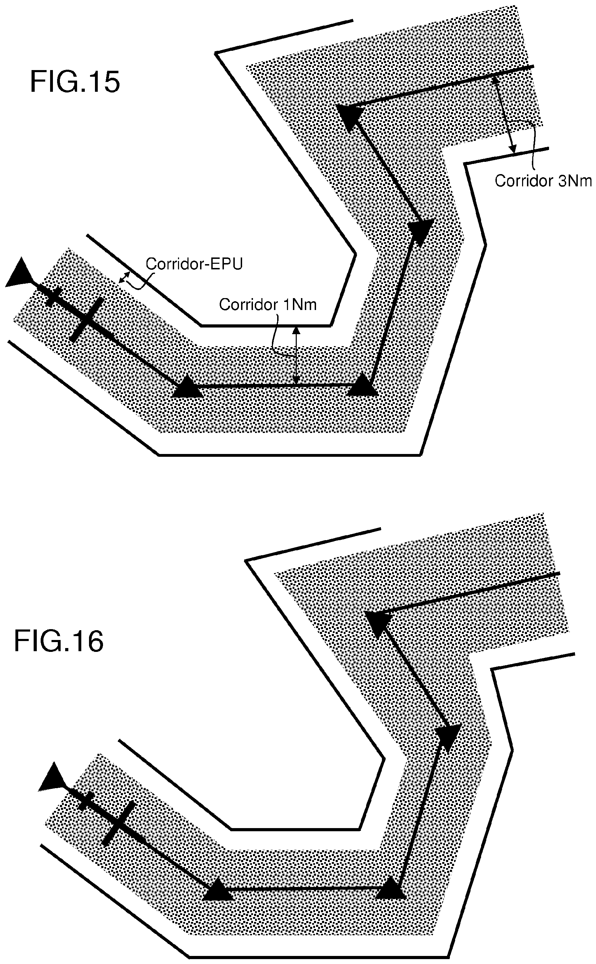

Selon divers modes de réalisation, le corridor peut être affiché (9040) sur demande sur un écran pour le pilote sous la forme d'une trajectoire « ruban » selon différentes variantes illustrées par les figures 15 à 20. Le dispositif d'affichage peut être un écran classique du cockpit comme un « Navigation Display » (ND) ou un écran « Primary Flight Display » (PFD) avec une capacité « Synthetic Visual System » (SVS) tel que représenté sur la figure 20. Pour un opérateur sol, ces informations peuvent être affichées sur un écran du poste de commande.

La trajectoire « ruban » est construite de manière à ne jamais sortir de la contingence (largeur du corridor) par rapport à la trajectoire de référence correspondant à la liste de segments initiaux du plan de vol, illustré sur les figures 15 et 16. Dans la mesure où un corridor est défini, la seule représentation des points des segments sans dessiner le fil qui les rejoint est un autre exemple de représentation proposé sur la figure 17.

Si sur un segment, la performance prédite est supérieure à la performance requise, le corridor redevient un fil sur le segment. De manière optionnelle, un message d'alerte peut être envoyé à l'opérateur lorsque ce segment va bientôt devenir le segment actif, autrement dit lorsque ce segment est proche du début de la liste de segments.

Ainsi, le pilote peut choisir d'afficher ou non :

- les prédictions de performance de navigation requise des segments ;
- les prédictions de performance de navigation estimée des segments ;
- le corridor résultant de la combinaison des 2 prédictions.

De façon optionnelle, en cas d'affichage multiples plans de vol, tous les affichages peuvent être temporairement inhibés de façon automatique ou manuelle.

La figure 11 illustre l'étape de calcul de la prédiction de performance de navigation estimée EPU pour un segment 'i' de la liste (étape 908 de la figure 9a).

Le procédé est décrit ici pour le calcul de la prédiction de performance de navigation horizontale estimée, cependant l'homme du métier transposera les principes du procédé au calcul de la prédiction de performance de navigation verticale estimée.

Avantageusement, le procédé utilise des fonctionnalités des systèmes de réception satellites embarqués à bord de l'aéronef pour la surveillance des satellites et la détection des satellites en panne. En particulier, le procédé utilise une capacité de ces systèmes à prédire la disponibilité des satellites pour une date et un lieu donnés, fonctionnalité dite « RAIM » pour « Reliability, Availability, and Integrity Monitoring ». Les récepteurs équipés d'une technologie RAIM sont aptes à prédire l'intégrité des signaux de positionnements GPS reçus des satellites et aptes à détecter par une fonction dite « FDE » pour « Fault Détection and Exclusion » les satellites en panne et les exclure du calcul de la position de l'aéronef.

La prédiction de performance de navigation estimée est liée au nombre et à la position des satellites disponibles à une heure ou un temps donné.

Le procédé est itératif et opère segment après segment (1102,1124). Pour un segment 'i' (1102), le procédé permet de déterminer (1104) si la prédiction satellitaire est précise et disponible en utilisant la fonctionnalité RAIM. Dans le cas positif, pour tout segment où la prédiction satellitaire est précise et disponible, le procédé permet d'établir la prédiction de performance de navigation estimé en fonction de la valeur de la performance satellitaire prédite, nommée « EPU_SATELLITE » (1110).

Pour augmenter sa précision, le procédé permet de combiner les informations satellitaires (1104) avec les informations (1106) des systèmes à base de centrales inertielles (IRS, AHRS...), par exemple pour couvrir les cas où le système satellitaire donne une valeur de position aéronef aberrante (dû par exemple à une perte transitoire de satellites). Le système inertiel va alors passiver cette réponse. En effet, le système inertiel dérive lentement et la position aéronef du système satellitaire qui est précise à long terme va passiver cette dérive en permettant au système inertiel de se recaler. Le système satellitaire fournit la valeur de sa performance (1104) et par l'utilisation du système inertiel (1106) le procédé permet de consolider cette valeur et calculer une prédiction de performance de navigation estimé nommée « EPU_HYBRID » (1108).

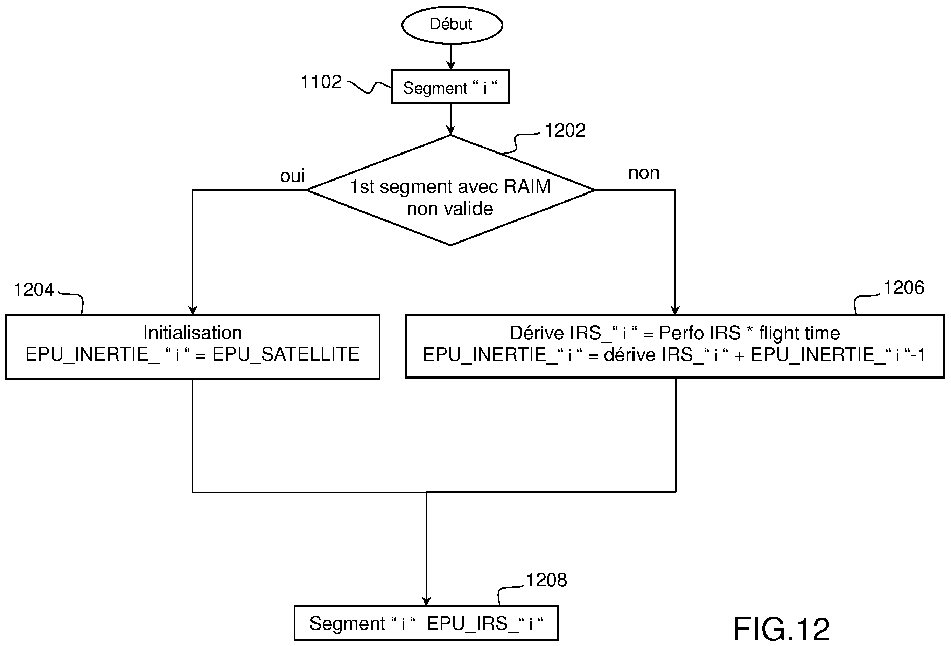

Revenant à l'étape initiale (1104), si sur un segment 'i' le système satellitaire n'est pas disponible ou présente une performance non adéquate par rapport à la performance de navigation requise (branche Non), le procédé permet de prendre en compte les informations de performance fournies par les autres systèmes de positionnement - balises et inertiels. Le procédé permet de calculer (1112) la performance de navigation estimé nommée EPU_BALISES associée aux types de balises disponibles autour du segment 'i' qui ne disposent pas d'information satellitaire (sans RAIM), et permet de calculer (1114) la performance de navigation estimé, nommée EPU_INERTIE, associée aux systèmes inertiels, en tenant compte de la dérive inertielle sur le segment 'i' « sans RAIM ». Puis le procédé permet de comparer (1116) les valeurs EPU_BALISES et EPU_INERTIE et prendre la valeur (1118, 1120) correspondant à la meilleure performance. Comme décrit, le procédé ne calcule la valeur EPU_BALISES (1112) que sur une non disponibilité de la capacité RAIM. Pour ce faire, le système recherche si dans la zone géographique du segment 'i' « sans RAIM », des balises de radio navigation existent (VOR, TACAN, DME, LOC, ILS, MLS...). Si c'est le cas, le procédé calcule la performance estimé associée aux balises en fonction des balises disponibles. Par exemple, l'EPU_BALISES est de l'ordre de 4Nm pour des balises VOR alors qu'il peut être de l'ordre de 0.3Nm pour des balises DME. L'EPU_BALISES pour le segment 'i' est comparé (1116) à l'EPU_INERTIE du même segment 'i' dont le calcul est décrit ci-après. De manière similaire, le procédé ne calcule la valeur de l'EPU_INERTIE (1114) que sur une non disponibilité de la capacité RAIM. Les systèmes inertiels (IRS, AHRS) ont une valeur d'EPU_INERTIE variable au cours du temps à cause de leur dérive intrinsèque qui est de l'ordre de 2Nm à 4Nm par heure selon la performance des systèmes et en l'absence de recalage par la position satellite. Quand la capacité RAIM devient non disponible pour un premier segment 'i' (1202), tel que décrit en référence à la figure 12 le procédé initialise (1204) l'EPU_INERTIE_i de ce segment avec la dernière valeur de l'EPU_SATELLITE. Après une première non disponibilité RAIM, pour les segments suivants qui ont une capacité RAIM non disponible (branche non,1206), l'EPU_INERTIE du segment 'i' correspondant est l'EPU_INERTIE du segment i-1' augmentée de la dérive du système inertiel qui est proportionnelle au temps de parcours du segment 'i'. Une estimation de la dérive peut être réalisée de façon linéaire le long du segment. Une telle opération peut être continuée de façon itérative tant que la valeur de l'EPU_INERTIE du segment reste inférieure à celle de l'EPU_BALISES.

Ainsi pour chaque segment 'i' de la liste, le procédé calcule (1122) une valeur d'EPU du segment « EPU prédit », et itère sur le segment suivant 'N+1' (1124) de manière à générer une liste de 'N' segments avec une prédiction de performance de navigation estimé calculée pour chaque segment (910).

De manière générale, l'EPU a une valeur dépendante des systèmes de positionnement disponibles. A titre d'exemple, le système satellitaire permet d'atteindre des EPU_SATELLITE (1110) de l'ordre de 0.1 Nm.

Avantageusement, le procédé permet de déterminer si la longueur d'un segment de la liste est trop longue, en regard de la configuration des satellites ou de la présence de balises sol, Dans un tel cas, le procédé permet de découper le segment en plusieurs sous-segments de longueur fixe, de manière à obtenir une valeur de performance prédite adéquate. Une longueur maximale de segment peut être fixée, comme égale à 100Nm par exemple. Dans une alternative, une autre méthode pour découper un segment trop long est d'utiliser la réponse RAIM qui dans les systèmes actuels donne l'état «RAIM» pour -15mn, -5mn, 0mn, + 5mn et +15mn par rapport à la position du segment.

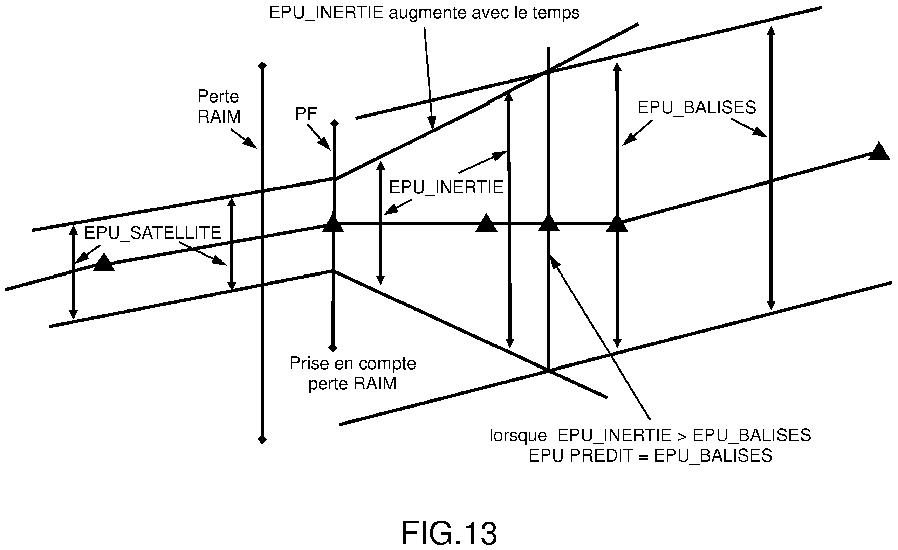

La figure 13 illustre le type d'EPU considéré pour plusieurs segments en fonction de la disponibilité ou non de la fonctionnalité RAIM. Avant la perte RAIM, la prédiction fournie est basée sur l'EPU_SATELLITE. Après la perte RAIM, au prochain point final (PF), la prédiction fournie est basée sur l'EPU_INERTIE tant qu'elle est inférieure à l'EPU_BALISES et devient basée sur l'EPU_BALISES après le prochain point final où elle lui devient supérieure.

Bien que les procédés de calcul de la prédiction de performance de navigation requise et estimée aient été décrits pour une prédiction de performance de navigation horizontale, un calcul correspondant de la prédiction de performance de navigation peut être appliqué à l'axe vertical de la trajectoire d'un aéronef.

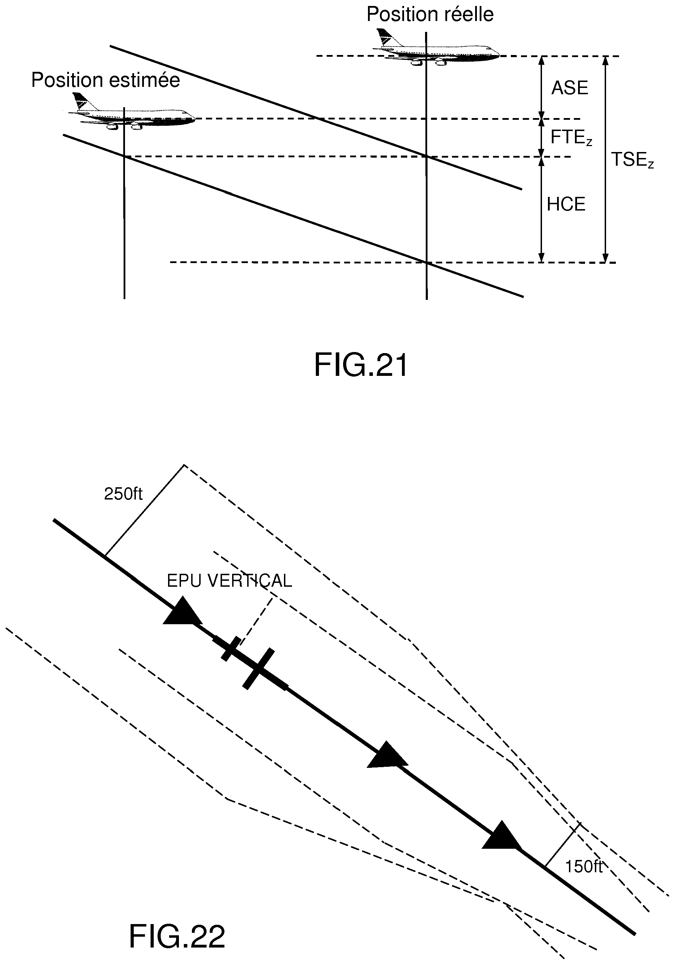

Comme pour l'axe horizontal, il existe sur l'axe vertical, la « Total System Error » (TSEz) en z (axe vertical) qui représente l'erreur dans le calcul de la position verticale, autrement dit l'altitude d'un aéronef. Cette erreur représentée sur la figure 21, a trois composantes, et est exprimée par l'équation suivante :

$$TSE_z = \sqrt{(FTE_z)^2 + (HCE)^2 + (ASE)^2}$$

où

- « Flight Test Error vertical » (FTEz) correspond à l'erreur de guidage vertical de l'aéronef en mode manuel ou automatique ;
- « Horizontal coupling Error » (HCE) correspond à l'erreur induite par l'erreur latérale (erreur de couplage horizontal) ; et
- « Altimetry System Error » (ASE) correspond à l'erreur du système d'altimétrie dans le calcul de l'altitude de l'aéronef à partir des capteurs de radio position, inertiels, ou satellitaires.

Il existe des exigences réglementaires relatives à l'écart entre un profil vertical de référence et l'aéronef, de l'ordre de 250ft à haute altitude, et de l'ordre de 150ft à basse altitude. Ces exigences qui définissent les performances verticales requises sont les entrées du calcul de la prédiction de performance verticale requise et peuvent être représentées sous forme d'un corridor vertical.

Selon le même principe que pour le calcul de la prédiction de performance horizontale, le procédé de calcul de la prédiction de performance verticale prend en compte les différents systèmes de positionnement vertical avec leur précision associée. Les principaux systèmes connus sont les systèmes de positionnement satellite (ex : GPS, GLONASS, etc), les systèmes à base de pression barométrique ou radio (Air Data Computer ADC, Radio Altimètre RA) et les systèmes de navigations à base d'inertie (ex : IRS, ADIRS, AHRS, etc...). En tenant compte des senseurs de position verticale, une estimation de la performance verticale est établie en fonction des senseurs disponibles. Cette estimation est la base du calcul de prédiction de performance verticale estimée.

Le procédé de calcul des prédictions de performance requise et estimée permet de construire un corridor vertical de navigation qui peut être affiché sur demande sur un écran pour le pilote. Le profil « ruban » vertical est construit de manière à ne jamais sortir de la contingence « 2 x la largeur du corridor » (2 fois la tolérance d'écart) verticale par rapport au profil vertical de référence correspondant à la liste de segments.

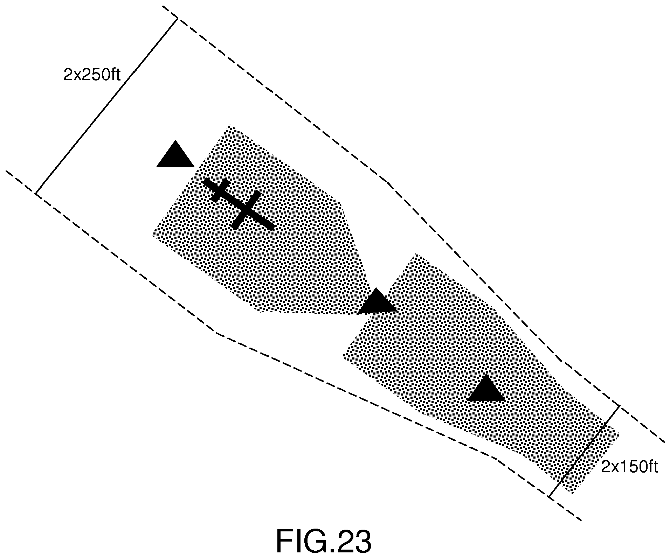

Les figures 22 et 23 illustrent des variantes d'affichage de corridor vertical sur un « Vertical display » (VD) ou sur un « Primary Flight Display » (PFD) ayant un « Synthetic Visual System 3D » (SVS 3D). Le système peut afficher le profil ruban vertical pour les prédictions requises et estimées à base de traits pointillés comme illustré sur la figure 21. Une autre proposition d'affichage de cette trajectoire ruban par le système d'affichage est fournie par la figure 22.

Selon un mode d'implémentation, le procédé de calcul des prédictions estimées et requises sur une liste de segments est porté par une partition spécifique d'une plateforme matérielle spécifique à l'avionique mais différente de celle du FMS. Selon un autre mode de réalisation préféré, ce calcul est effectué sur la plateforme d'exécution du FMS, par des composants adaptés aux calculs. En effet, l'avènement de l'avionique modulaire intégrée sur les aéronefs récents, a permis la définition de plateformes d'exécution et de communication numérique entre les fonctions. Cette évolution a toutefois entraîné une augmentation de la complexité - notamment la complexité interne des fonctions mais aussi la complexité du processus de configuration du système avionique - et des besoins de performances grandissants et d'optimisation de ressources. Dans ce contexte, les nouvelles plateformes matérielles sont dotées de capacités de gestion (des opérations, de la sécurité et de maintenance), d'optimisation d'énergie et de localisation, qui vont au-delà des fonctions standards des plateformes connues. Selon un autre aspect, l'invention concerne un produit programme d'ordinateur comprenant des instructions de code permettant d'effectuer les étapes du procédé selon l'invention. Le procédé peut s'implémenter à partir d'éléments matériel et/ou logiciel. Le procédé peut être disponible en tant que produit programme d'ordinateur sur un support lisible par ordinateur. Le procédé peut être implémenté sur un système pouvant utiliser un ou plusieurs circuits électronique dédiés ou un circuit à usage général. La technique du procédé selon l'invention peut se réaliser sur une machine de calcul reprogrammable (un processeur ou un microcontrôleur par exemple) exécutant un programme comprenant une séquence d'instructions, ou sur une machine de calcul dédiée (par exemple un ensemble de portes logiques comme un FPGA ou un ASIC, ou tout autre module matériel). Les différents modules du système selon l'invention peuvent être implémentés sur un même processeur ou sur un même circuit, ou distribués sur plusieurs processeurs ou plusieurs circuits. Les modules du système selon l'invention consistent en des moyens de calcul incluant un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici.

## Revendications

1. Procédé de calcul de prédiction de performance de navigation estimée pour une trajectoire d'un aéronef, le procédé étant opéré par une plateforme de calcul pour aéronef et comprenant les étapes de :

   - recevoir (902) une liste de segments comprenant l'ensemble des segments d'un plan de vol avec une prédiction d'un temps de passage associée à chaque segment;
   - pour chaque segment de la liste :

      - identifier (904) les systèmes de positionnement disponibles dans la zone géographique dudit segment ;
      - déterminer (906) les valeurs de performance des systèmes de positionnement identifiés et sélectionner le système de positionnement présentant l'erreur de calcul de performance de navigation la plus faible pour la position dudit segment et ledit temps de passage prédit ;
      - calculer (908) une prédiction de performance de navigation estimée, à partir de données issues du système de positionnement sélectionné;
      et

   - mettre à jour (912) la liste de segments avec la prédiction de performance de navigation estimée associée à chaque segment.

2. Le procédé selon la revendication 1 dans lequel l'étape d'identification des systèmes de positionnement consiste à identifier l'ensemble des systèmes de positionnement satellitaires, balises et inertiels disponibles pour ledit segment.

3. Le procédé selon la revendication 1 ou 2 dans lequel l'étape de calcul de la prédiction de performance de navigation estimée consiste à déterminer si une prédiction satellitaire pour ledit segment est précise et disponible, et si oui, calculer la prédiction de performance de navigation estimée à partir des données satellitaires.

4. Le procédé selon la revendication 3 comprenant, si la prédiction satellitaire pour ledit segment n'est pas précise ou non disponible, une étape de comparer les valeurs de performance de systèmes balises et inertiels et calculer la prédiction de performance de navigation estimée à partir des données du système de positionnement balises ou inertiel présentant l'erreur de calcul de performance de navigation la plus faible pour ledit segment.

5. Le procédé selon la revendication 4 dans lequel le calcul de la prédiction de performance de navigation estimée, lorsqu'il est fait à partir des données du système inertiel prend en compte la dérive du système inertiel.

**6.** Le procédé selon la revendication 4 dans lequel le calcul de la prédiction de performance de navigation estimée, lorsqu'il est fait à partir des données du système balises prend en compte la performance des balises disponibles dans la zone géographique dudit segment.

**7.** Le procédé selon l'une quelconque des revendications 1 à 6 dans lequel les valeurs de performance de navigation des systèmes de positionnement satellitaires sont issues d'un récepteur satellitaire comprenant une fonctionnalité « RAIM » embarqué à bord de l'aéronef.

**8.** Le procédé selon l'une quelconque des revendications 1 à 7 comprenant de plus une étape de découper ledit segment en sous-segments pour effectuer le calcul de prédiction, ledit découpage pouvant être fait selon des longueurs de sous-segments fixes ou en considérant la portée maximale des prédictions satellitaires.

**9.** Le procédé selon l'une quelconque des revendications 1 à 8 dans lequel les étapes sont exécutées pour un calcul de prédiction de performance de navigation horizontale estimée et/ou pour un calcul de prédiction de performance de navigation verticale estimée.

**10.** Le procédé selon l'une quelconque des revendications 1 à 9 dans lequel les étapes sont ré-exécutées automatiquement si des prédictions de temps de passage ou le plan de vol changent.

**11.** Dispositif pour le calcul de prédiction de performance de navigation estimée pour une trajectoire d'un aéronef, le dispositif comprenant :

- des moyens permettant de recevoir une liste de segments comprenant l'ensemble des segments d'un plan de vol avec une prédiction d'un temps de passage associée à chaque segment;
- des moyens permettant, pour chaque segment de la liste :

- d'identifier les systèmes de positionnement disponibles dans la zone géographique dudit segment ;
- de déterminer les valeurs de performance des systèmes de positionnement identifiés et sélectionner le système de positionnement présentant l'erreur de calcul de performance de navigation la plus faible pour la position dudit segment et ledit temps de passage prédit ;
- de calculer une prédiction de performance de navigation estimée, à partir de données issues du système de positionnement sélectionné; et

- des moyens permettant de mettre à jour la liste de segments avec la prédiction de performance de navigation estimée associée à chaque segment.

**12.** Le dispositif selon la revendication 11 dans lequel les moyens sont aptes à opérer les étapes du procédé selon l'une quelconque des revendications 2 à 10.

**13.** Système de gestion de vol (FMS) ou ordinateur embarqué de type EFB comprenant un dispositif de calcul de prédiction de performance de navigation estimée pour une trajectoire d'un aéronef selon la revendication 11 ou 12.

**14.** Un produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur.

**15.** Procédé d'affichage de prédictions de performance de navigation estimée et requise pour une trajectoire d'un aéronef, le procédé étant opéré par une plateforme de calcul pour aéronef et comprenant les étapes de :

- calculer (9010) des prédictions de performance de navigation estimée pour une liste de segments d'un plan de vol, selon les étapes du procédé de l'une quelconque des revendications 1 à 10 ;
- calculer (9020) pour la même liste de segments, des prédictions de performance de navigation requise ; et
- représenter (9040) graphiquement sur un moyen d'affichage lesdites prédictions de performance de navigation estimée et requise.

**16.** Le procédé selon la revendication 15 dans lequel l'étape de calcul des prédictions de performance de navigation requise comprend les étapes de :

- recevoir ladite liste de segments du plan de vol ;
- pour chaque segment de la liste :

  - identifier toutes les contingences constituant des contraintes de performance de navigation;
  - déterminer et sélectionner la contingence la plus contraignante pour ledit segment ;
  - calculer une prédiction de performance de navigation requise, en fonction de données issues de la contingence sélectionnée ;
  et

  - mettre à jour la liste de segments avec la prédiction de performance de navigation requise associée à chaque segment.

17. Le procédé selon la revendication 15 ou 16 dans lequel la représentation graphique consiste à afficher en superposition sur une trajectoire fil lesdites prédictions de performance de navigation estimée et requise.

18. Le procédé selon l'une quelconque des revendications 15 à 17 comprenant avant l'étape d'affichage, une étape consistant pour chaque segment à soustraire aux prédictions de performance de navigation requise, les prédictions de performance de navigation estimée, pour construire une trajectoire corridor, et dans lequel la représentation graphique consiste à afficher lesdites prédictions de performance de navigation estimée et requise en fonction du corridor.

19. Le procédé selon la revendication 18 dans lequel l'étape d'affichage consiste à afficher une trajectoire fil pour les segments ayant une prédiction de performance de navigation estimée supérieure à la prédiction de performance de navigation requise.

20. Le procédé selon la revendication 18 ou 19 dans lequel la représentation graphique consiste à représenter la latitude de navigation en contraste sur la trajectoire corridor.

21. Dispositif d'affichage de prédictions de performance de navigation estimée et requise pour une trajectoire d'un aéronef, le dispositif d'affichage comprenant un moyen d'affichage et des moyens de calcul permettant de calculer des prédictions de performance de navigation estimée et requise, les prédictions de performance de navigation estimée étant calculées selon les étapes du procédé de l'une quelconque des revendications 1 à 10, le dispositif comprenant de plus des moyens pour représenter graphiquement sur ledit moyen d'affichage lesdites prédictions de performance de navigation estimée et requise.

22. Le dispositif d'affichage selon la revendication 21 dans lequel le moyen d'affichage est un écran du cockpit de l'aéronef, comme un « Navigation Display » (ND) ou un écran « Primary Flight Display » (PFD).

**Patentansprüche**

1. Verfahren zum Berechnen einer Vorhersage von geschätzter Navigationsleistung für eine Flugbahn eines Luftfahrzeugs, wobei das Verfahren von einer Rechenplattform für Luftfahrzeuge ausgeführt wird und die folgenden Schritte beinhaltet:

   - Empfangen (902) einer Liste von Segmenten, die alle Segmente eines Flugplans mit einer Vorhersage einer mit jedem Segment assoziierten Durchflugzeit umfasst;
   - für jedes Segment der Liste:

     - Identifizieren (904) der in der geografischen Zone des Segments verfügbaren Positionierungssysteme;
     - Bestimmen (906) der identifizierten Leistungswerte der Positionierungssysteme und Auswählen des Positionierungssystems mit dem geringsten Navigationsleistungsrechenfehler für die Position des Segments und die vorhergesagte Durchflugzeit;
     - Berechnen (908) einer Vorhersage von geschätzter Navigationsleistung auf der Basis von Daten von dem gewählten Positionierungssystem; und
     - Aktualisieren (912) der Liste von Segmenten mit der mit jedem Segment assoziierten Vorhersage von geschätzter Navigationsleistung.

**2.** Verfahren nach Anspruch 1, bei dem der Schritt des Identifizierens der Positionierungssysteme im Identifizieren aller Satellitenpositionierungssysteme, Baken und Trägheitseinheiten besteht, die für das Segment zur Verfügung stehen.

**3.** Verfahren nach Anspruch 1 oder 2, bei dem der Schritt des Berechnens der Vorhersage von geschätzter Navigationsleistung im Feststellen besteht, ob eine Satellitenvorhersage für das Segment präzise und verfügbar ist, und wenn ja, Berechnen der Vorhersage von geschätzter Navigationsleistung auf der Basis der Satellitendaten.

**4.** Verfahren nach Anspruch 3, das, wenn die Satellitenvorhersage für das Segment nicht präzise oder nicht verfügbar ist, einen Schritt des Vergleichens der Leistungswerte von Baken- und Trägheitssystemen und das Berechnen der Vorhersage von geschätzter Navigationsleistung auf der Basis der Daten des Baken- oder Trägheitspositionierungssystems mit dem geringsten Navigationsleistungsrechenfehler für das Segment beinhaltet.

**5.** Verfahren nach Anspruch 4, bei dem die Berechnung der Vorhersage von geschätzter Navigationsleistung, wenn sie auf der Basis der Daten des Trägheitssystems erfolgt, die Drift des Trägheitssystems berücksichtigt.

**6.** Verfahren nach Anspruch 4, bei dem die Berechnung der Vorhersage von geschätzter Navigationsleistung, wenn sie auf der Basis von Daten des Bakensystems erfolgt, die Leistung der in der geografischen Zone des Segments verfügbaren Baken berücksichtigt.

**7.** Verfahren nach einem der Ansprüche 1 bis 6, bei dem die Navigationsleistungswerte der Satellitenpositionierungssysteme von einem Satellitenempfänger kommen, der eine an Bord des Luftfahrzeugs installierte "RAIM"-Funktionalität umfasst.

**8.** Verfahren nach einem der Ansprüche 1 bis 7, das ferner einen Schritt des Unterteilens des Segments in Untersegmente beinhaltet, um die Vorhersageberechnung zu bewirken, wobei das Beschneiden gemäß den Längen von festen Sub segmenten oder unter Berücksichtigung des maximalen Bereichs der Satellitenvorhersagen erfolgen kann.

**9.** Verfahren nach einem der Ansprüche 1 bis 8, bei dem die Schritte für eine Berechnung der Vorhersage von geschätzter horizontale Navigationsleistung und/oder für eine Berechnung der Vorhersage von geschätzter vertikaler Navigationsleistung ausgeführt werden.

**10.** Verfahren nach einem der Ansprüche 1 bis 9, bei dem die Schritte automatisch erneut ausgeführt werden, wenn sich Durchflugzeitvorhersagen oder der Flugplan ändern.

**11.** Vorrichtung zum Berechnen der Vorhersage von geschätzter Navigationsleistung für eine Flugbahn eines Luftfahrzeugs, wobei die Vorrichtung Folgendes umfasst:

- Mittel, die den Empfang einer Segmentliste zulassen, die alle Segmente eines Flugplans umfasst, mit einer Vorhersage einer mit jedem Segment assoziierten Durchflugzeit;
- Mittel, die für jedes Segment der Liste Folgendes zulassen:

- Identifizieren der in der geografischen Zone des Segments verfügbaren Positionierungssysteme;
- Bestimmen der Leistungswerte der identifizierten Positionierungssysteme und Auswählen des Positionierungssystems mit dem kleinsten Navigationsleistungsrechenfehler für die Position des Segments und der vorhergesagten Durchflugzeit;
- Berechnen einer Vorhersage von geschätzter Navigationsleistung auf der Basis von Daten von dem gewählten Positionierungssystem; und
- Mittel, die die Aktualisierung der Segmentliste mit der mit jedem Segment assoziierten Vorhersage von geschätzter Navigationsleistung erlauben.

**12.** Vorrichtung nach Anspruch 11, bei der die Mittel zum Implementieren der Schritte des Verfahrens nach einem der Ansprüche 2 bis 10 ausgelegt sind.

**13.** Flugmanagementsystem (FMS) oder EFB-Bordcomputer, umfassend eine Vorrichtung zum Berechnen einer Vorhersage von geschätzter Navigationsleistung für eine Flugbahn eines Luftfahrzeugs nach Anspruch 11 oder 12.

14. Computerprogrammprodukt, wobei das Computerprogramm Code-Befehle umfasst, die das Ausführen der Schritte des Verfahrens nach einem der Ansprüche 1 bis 10 zulassen, wenn das Programm auf einem Computer ausgeführt wird.

15. Verfahren zum Anzeigen von Vorhersagen von geschätzter Navigationsleistung, die für eine Flugbahn eines Luftfahrzeugs erforderlich sind, wobei das Verfahren von einer Rechenplattform für Luftfahrzeuge ausgeführt wird und die folgenden Schritte beinhaltet:

- Berechnen (9010) von Vorhersagen von geschätzter Navigationsleistung für eine Liste von Segmenten eines Flugplans gemäß den Schritten des Verfahrens nach einem der Ansprüche 1 bis 10;
- Berechnen (9020), für dieselbe Segmentliste, von Vorhersagen einer benötigten Navigationsleistung; und
- Darstellen (9040) der Vorhersagen von geschätzter und benötigter Navigationsleistung auf einem Anzeigemittel.

16. Verfahren nach Anspruch 15, bei dem der Schritt des Berechnens von Vorhersagen von benötigter Navigationsleistung die folgenden Schritte beinhaltet:

- Empfangen der Liste von Segmenten des Flugplans;
- für jedes Segment der Liste:

- Identifizieren aller Eventualitäten, die Navigationsleistungsbeschränkungen bilden;
- Bestimmen und Auswählen der am meisten beschränkenden Eventualität für das Segment;
- Berechnen einer Vorhersage der benötigten Navigationsleistung in Abhängigkeit von Daten der gewählten Eventualität; und
- Aktualisieren der Liste von Segmenten mit der Vorhersage von mit jedem Segment assoziierter benötigter Navigationsleistung.

17. Verfahren nach Anspruch 15 oder 16, bei dem die grafische Darstellung im überlagerten Anzeigen der Vorhersagen von geschätzter und benötigter Navigationsleistung auf einer Drahtflugbahn besteht.

18. Verfahren nach einem der Ansprüche 15 bis 17, das vor dem Anzeigeschritt einen Schritt beinhaltet, der für jedes Segment darin besteht, von den Vorhersagen der benötigten Navigationsleistung die Vorhersagen der geschätzten Navigationsleistung zu subtrahieren, um eine Korridorflugbahn zu konstruieren, und wobei die grafische Darstellung darin besteht, die Vorhersagen der geschätzten und benötigten Navigationsleistung in Abhängigkeit von dem Korridor anzuzeigen.

19. Verfahren nach Anspruch 18, bei dem der Anzeigeschritt darin besteht, eine Flugbahn für die Segmente mit einer Vorhersage der geschätzten Navigationsleistung anzuzeigen, die größer ist als die Vorhersage der benötigten Navigationsleistung.

20. Verfahren nach Anspruch 18 oder 19, bei dem die grafische Darstellung darin besteht, die Breite der Navigation im Kontrast zur Korridorbahn darzustellen.

21. Vorrichtung zum Anzeigen von Vorhersagen von geschätzter und benötigter Navigationsleistung für eine Flugbahn eines Luftfahrzeugs, wobei die Anzeigevorrichtung ein Anzeigemittel und Rechenmittel umfasst, die das Berechnen der Vorhersagen von geschätzter und benötigter Navigationsleistung zulassen, wobei die Vorhersagen von geschätzter Navigationsleistung gemäß den Schritten des Verfahrens nach einem der Ansprüche 1 bis 10 berechnet werden, wobei die Vorrichtung ferner Mittel zum grafischen Darstellen der Vorhersagen von geschätzter und benötigter Navigationsleistung auf dem Anzeigemittel umfassen.

22. Anzeigevorrichtung nach Anspruch 21, bei der das Anzeigemittel ein Bildschirm im Cockpit des Luftfahrzeugs wie ein "Navigation Display" (ND) oder ein "Primary Flight Display" (PFD) Bildschirm ist.

**Claims**

1. Method of calculating estimated navigation performance prediction for a trajectory of an aircraft, the method being operated by an aircraft computing platform and comprising the steps of:

- receiving (902) a list of segments comprising all of the segments of a flight plan with a prediction of a transit time associated with each segment;
- for each segment of the list:

   - identifying (904) the positioning systems that are available in the geographical zone of the said segment;
   - determining (906) the performance values of the positioning systems identified and selecting the positioning system exhibiting the lowest navigation performance calculation error for the position of the said segment and the said predicted transit time;
   and
   - calculating (908) an estimated navigation performance prediction, on the basis of data arising from the positioning system selected;
   and
   - updating (912) the list of segments with the estimated navigation performance prediction associated with each segment.

2. Method according to Claim 1, wherein the step of identifying the positioning systems consists in identifying all of the satellite, beacon and inertial positioning systems available for the said segment.

3. Method according to Claim 1 or 2, wherein the step of calculating the estimated navigation performance prediction consists in determining whether a satellite prediction for the said segment is precise and available, and, if so, calculating the estimated navigation performance prediction on the basis of the satellite data.

4. Method according to Claim 3, comprising, if the satellite prediction for the said segment is not precise or unavailable, a step of comparing the performance values of beacon and inertial systems and calculating the estimated navigation performance prediction on the basis of the data of the beacon or inertial positioning system exhibiting the lowest navigation performance calculation error for the said segment.

5. Method according to Claim 4, wherein the calculation of the estimated navigation performance prediction, when it is done on the basis of the data of the inertial system, takes into account the drift of the inertial system.

6. Method according to Claim 4, wherein the calculation of the estimated navigation performance prediction, when it is done on the basis of the data of the beacon system, takes into account the performance of the beacons available in the geographical zone of the said segment.

7. Method according to any one of Claims 1 to 6, wherein the values of navigation performance of the satellite positioning systems arise from a satellite receiver comprising a "RAIM" functionality embedded aboard the aircraft.

8. Method according to any one of Claims 1 to 7, further comprising a step of cutting the said segment into sub-segments so as to perform the prediction calculation, the said cutting being able to be done according to fixed sub-segment lengths or by considering the maximum range of the satellite predictions.

9. Method according to any one of Claims 1 to 8, wherein the steps are executed for a calculation of estimated horizontal navigation performance prediction and/or for a calculation of estimated vertical navigation performance prediction.

10. Method according to any one of Claims 1 to 9, wherein the steps are re-executed automatically if transit time predictions or the flight plan change.

11. Device for the calculation of estimated navigation performance prediction for a trajectory of an aircraft, the device comprising:

   - means for receiving a list of segments comprising all of the segments of a flight plan with a prediction of a transit time associated with each segment;
   - means adapted, for each segment of the list:

      - to identify the positioning systems that are available in the geographical zone of the said segment;
      - to determine the performance values of the positioning systems identified and select the positioning system exhibiting the lowest navigation performance calculation error for the position of the said segment and the said predicted transit time;

- to calculate an estimated navigation performance prediction, on the basis of data arising from the positioning system selected;

and

- means for updating the list of segments with the estimated navigation performance prediction associated with each segment.

12. Device according to Claim 11, wherein the means are able to operate the steps of the method according to any one of Claims 2 to 10.

13. Embedded flight management system (FMS) or computer of EFB type comprising a device for calculating estimated navigation performance prediction for a trajectory of an aircraft according to Claim 11 or 12.

14. A computer program product, said computer program product comprising code instructions that perform the steps of the method according to any one of Claims 1 to 10, when said program is executed on a computer.

15. Method of displaying predictions of estimated and required navigation performance for a trajectory of an aircraft, the method being operated by an aircraft computing platform and comprising the steps of:

- calculating (9010) predictions of estimated navigation performance for a list of segments of a flight plan, according to the steps of the method of any one of Claims 1 to 10;
- calculating (9020), for the same list of segments, predictions of required navigation performance;

and

- representing (9040) the said predictions of estimated and required navigation performance graphically on a display means.

16. Method according to Claim 15, wherein the step of calculating the predictions of required navigation performance comprises the steps of:

- receiving said list of segments of the flight plan;
- for each segment of the list:

- identifying all the contingencies constituting navigation performance constraints;
- determining and selecting the most constraining contingency for the said segment;
- calculating a prediction of required navigation performance, as a function of data arising from the selected contingency;

and

- updating the list of segments with the prediction of required navigation performance associated with each segment.

17. Method according to Claim 15 or 16, wherein the graphical representation consists in displaying the said predictions of estimated and required navigation performance superimposed on a wire trajectory.

18. Method according to any one of Claims 15 to 17, comprising, before the display step, a step consisting for each segment in subtracting the predictions of estimated navigation performance from the predictions of required navigation performance, so as to construct a corridor trajectory, and wherein the graphical representation consists in displaying the said predictions of estimated and required navigation performance as a function of the corridor.

19. Method according to Claim 18, wherein the display step consists in displaying a wire trajectory for the segments having a greater estimated navigation performance prediction than the required navigation performance prediction.

20. Method according to Claim 18 or 19, wherein the graphical representation consists in representing the navigation latitude in contrast on the corridor trajectory.

21. Device for displaying predictions of estimated and required navigation performance for a trajectory of an aircraft, the display device comprising a display means and calculation means adapted to calculate predictions of estimated and required navigation performance, the predictions of estimated navigation performance being calculated according to the steps of the method of any one of Claims 1 to 10, the device further comprising means for representing the said predictions of estimated and required navigation performance graphically on the said display means.

**22.** Display device according to Claim 21, wherein the display means is a screen of the cockpit of the aircraft, such as a "Navigation Display" (ND) or a "Primary Flight Display" (PFD) screen.

FIG.1

EP 3 267 156 B1

FIG.2

FIG.3

FIG.4a

FIG.4b

FIG.5

FIG.6

EPU 0.3

Corridor 3Nm

Corridor 1Nm

EPU 0.1

FIG.7

Corridor 3Nm

EPU 0.5

EPU 0.1

Corridor 1Nm

FIG.8

Début

Réception liste de " N " segments datés — 902

Segment " i "

904 — Identifier systèmes de positionnement

906 — Déterminer valeurs de performances

908 — Calculer EPU

i = N

i = i + 1

910

912 — Liste des " N " segments avec EPU

FIG.9a

FIG.9b

FIG.9c

1000

FMS

Pilote automatique ⟶ 1210

Bases de données | Fonctions FMS

1207

1208

PERF DB

1204

Guidance | Datalink

1209

Centres AOC/ATC

1206

1201

NAV DB

1203

FPLN | TRAJ | PRED | LOC NAV

1202

1205

Senseurs GPS, INR...

1230

1220 ⟶ IHM : écrans, clavier

FIG.10

FIG.11

EP 3 267 156 B1

FIG.12

**Début**

1102 — Segment " i "

1202 — 1st segment avec RAIM non valide

oui → 1204 — Initialisation
EPU_INERTIE_" i " = EPU_SATELLITE

non → 1206 — Dérive IRS_" i " = Perfo IRS * flight time
EPU_INERTIE_" i " = dérive IRS_" i " + EPU_INERTIE_" i "-1

1208 — Segment " i " EPU_IRS_" i "

EPU_BALISES

lorsque EPU_INERTIE > EPU_BALISES
EPU PREDIT = EPU_BALISES

EPU_INERTIE augmente avec le temps

EPU_INERTIE

Prise en compte
perte RAIM

PF

Perte
RAIM

EPU_SATELLITE

FIG.13

FIG.14

Corridor _" i " = corridor défaut

Corridor pilote — non

oui

Corridor DB — non

oui

Corridor opérateur < Corridor Défaut

Corridor opérateur < Corridor DB

Corridor DB

non

oui

oui

non

oui

non

Corridor_" i "= Corridor défaut

Corridor_" i "= Corridor Pilote

Corridor_" i "= Corridor DB

Corridor_" i "= Corridor défaut

" i " = " i "+1

EP 3 267 156 B1

32

FIG.15

Corridor 3Nm

Corridor-EPU

Corridor 1Nm

FIG.16

FIG.17

FIG.18

FIG.19

FIG.20

Position réelle

Position estimée

ASE

FTE$_z$

TSE$_z$

HCE

# FIG.21

250ft

EPU VERTICAL

150ft

# FIG.22

2x250ft

2x150ft

FIG.23

## RÉFÉRENCES CITÉES DANS LA DESCRIPTION

**Documents brevets cités dans la description**

- FR 2998065 A1
- US 2011301842 A1
- FR 3008818 A1